(19)

Europäisches
Patentamt
European
Patent Office
Office européen
des brevets

(11) EP 4 692 192 A1

(12) EUROPEAN PATENT APPLICATION
published in accordance with Art. 153(4) EPC

(43) Date of publication:
11.02.2026 Bulletin 2026/07

(21) Application number: 24780868.6

(22) Date of filing: 29.03.2024

(51) International Patent Classification (IPC):
C08J 11/08 (2006.01)   C08J 3/14 (2006.01)

(52) Cooperative Patent Classification (CPC):
C08J 3/14; C08J 11/08; Y02W 30/62

(86) International application number:
PCT/JP2024/013204

(87) International publication number:
WO 2024/204774 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.03.2023 JP 2023053771
30.11.2023 JP 2023202883

(71) Applicant: Mitsubishi Chemical Corporation
Tokyo 100-8251 (JP)

(72) Inventors:
• KASHIMA, Ayaka
  Tokyo 100-8251 (JP)
• YOKOGI, Masashi
  Tokyo 100-8251 (JP)
• NAKAMURA, Makoto
  Tokyo 100-8251 (JP)

(74) Representative: Vossius & Partner
Patentanwälte Rechtsanwälte mbB
Siebertstraße 3
81675 München (DE)

(54) PRODUCTION METHOD FOR RECYCLED POLYESTER AND PRODUCTION METHOD FOR POLYESTER COMPOSITE MATERIAL

(57) Provided is a production method that makes it possible to produce a recycled polyester having excellent color tone and mechanical strength by a method with a small environmental load. A method for producing a recycled polyester including a step (A) of washing a polyester (PEs) composite material using a washing solvent obtained by mixing a solvent (X1) composed of a phenolic solvent and/or a chlorine-based organic solvent and one or more solvents (Y1) selected from the group consisting of an aromatic hydrocarbon-based solvent, an aliphatic hydrocarbon-based solvent, a ketone-based solvent, an aldehyde-based solvent, an alcohol-based solvent, an ether-based solvent, and water, a step (B) of dissolving PEs in the washed PEs composite material in a dissolving solvent containing a solvent (X2) composed of a phenolic solvent and/or a chlorine-based organic solvent, subjecting the solution to solid-liquid separation to obtain a liquid component (L), a step (C) of obtaining PEs from the liquid component (L) using a poor solvent (PS) having a boiling point of 130°C or lower, and a step (D) of drying PEs.

Fig. 1

PEs COMPOSITE MATERIAL

STEP (A): PEs COMPOSITE MATERIAL IS WASHED WITH WASHING SOLVENT.

POST WASHING? — Yes → STEP (A0): PEs COMPOSITE MATERIAL IS POST-WASHED.

No

STEP (B): PEs IN PEs COMPOSITE MATERIAL IS DISSOLVED IN DISSOLVING SOLVENT, AND LIQUID COMPONENT (L) CONTAINING PEs DISSOLVED THEREIN IS ACQUIRED BY SOLID-LIQUID SEPARATION.

STEP (C): LIQUID COMPONENT (L) AND POOR SOLVENT (PS) ARE MIXED TO PRECIPITATE PEs, AND PEs IS ACQUIRED BY SOLID-LIQUID SEPARATION.

POST WASHING? — Yes → STEP (C0): PEs IS POST-WASHED.

No

STEP (D): PEs IS DRIED.

RECYCLED PEs

EP 4 692 192 A1

## Description

Technical Field

The present invention relates to a method for producing a recycled polyester and a method for producing a polyester composite material.

Background Art

Polyesters (hereinafter referred to as "PEs" in some cases) have excellent mechanical strength, heat resistance, chemical resistance, and moisture proofness and are easy to mold and inexpensive, and are thus in use in a variety of uses, such as fibers, films, and resin molded products. On the other hand, polyesters are inexpensive and are thus often massively produced and consumed, and accordingly a problem is that the life cycle per product is short, products are massively disposed of and incinerated or buried, and the impact on environment is huge since the products are derived from petroleum.

Therefore, there is a demand for establishing a recycling method for polyesters. As recycling methods for polyesters, chemical recycling (for example, Patent Literature 1) and material recycling (for example, Patent Literature 2 and 3) have been proposed. In recent years, PET bottle recycling has been underway, and products for which a recycled polyester is used have been released.

Citation List

Patent Literature

Patent Literature 1: Japanese Patent Laid-Open No. 2002-60369
Patent Literature 2: Japanese Patent Laid-Open No. 11-60795
Patent Literature 3: Japanese Patent No. 6708642

Summary of Invention

Technical Problem

However, in recent years, the bottle-to-bottle horizontal recycling technique has advanced, and it has become possible to produce PET bottles again from used PET bottles, which has made it difficult to use used PET bottles as recycled raw materials for other polyester products. What has been described above creates a demand for establishing a technique of obtaining recycled polyesters from polyester composite materials such as fiber products such as clothing including clothes, household goods, and automotive interior parts and injection molded products and extrusion molded products into which another resin or the like is mixed.

Incidentally, in the chemical recycling method as in Patent Literature 1 or the like, impurities or other resins can be removed, and it is thus possible to obtain recycled polyesters having a quality comparable to those of petroleum-derived virgin products. On the other hand, in the chemical recycling, since there are many processes, and a large amount of heat energy is required for depolymerization, by which a polyester is decomposed up to monomers, monomer transesterification, and repolymerization, there is a problem in that the environmental load is large or the production cost increases.

In the material recycling, recycling is possible at a low cost; however, when a recycled raw material contains a variety of impurities, a recycled polyester to be obtained also contains impurities, and the quality thus deteriorates. For example, in the case of a fiber product, since a fiber product colored with a variety of dyes with different colors is contained, a recycled polyester contains a coloring component, and there is thus a high possibility that a black recycled polyester may be obtained, and it becomes extremely difficult to color a fiber product produced using the black recycled polyester to a desired color. In addition, in the case of a polyester composite material, since not only a polyester but also other resins are contained, it is difficult to collect the polyester alone by the material recycling.

In Patent Literature 2 and 3, a method in which a polyester is dissolved, other fiber materials or impurities are separated, and a recycled polyester is obtained using a precipitation solvent of the polyester has been reported.

However, in Patent Literature 2, while hexafluoroisopropanol (HFIP) is recommended as a solvent that dissolves the polyester, HFIP is corrosive and thus not suitable for industrialization, is easily volatilized, and is highly toxic, and thus cannot be said as an optimal solvent. In addition, regarding this method, dyes used to color the fibers or the impurities contained in the fibers are not sufficiently mentioned. In addition, since no bleaching operation is performed on the colored fiber product, it is considered that the color tone of the recycled polyester deteriorates.

When the present inventors actually dissolved a polyester fiber product without performing any bleaching operation and collected a recycled polyester as described in Comparative Example 1 to be described below, it was not possible to sufficiently remove a coloring component in the fiber.

In Patent Literature 3, a method in which a polyester fiber product is bleached before dissolved, the polyester is dissolved using the same solvent at a temperature higher than the temperature during the bleaching, and the solvent is removed by distillation has been reported. While an annular amide is selected as the dissolving solvent, since the annular amide has a high boiling point, there is a high possibility that the annular amide may remain in the recycled polyester, a large amount of energy needs to be used in the distillation operation, and the method cannot be thus said as an optimal process. In addition, at the time of removing the solvent from the recycled polyester, the polyester is distilled at a high temperature, and there is thus a concern that the recycled polyester may depolymerize.

When the present inventors actually obtained a recycled polyester by the same method as in Patent Literature 3 as described in Comparative Example 2 to be described below, it was not possible to sufficiently remove a coloring component, and while the solution was dried at a high temperature under reduced pressure for a long period of time, a large amount of the dissolving solvent remained, and the molecular weight also decreased due to a thermal load.

Under such a circumstance, there is a demand for collecting a recycled polyester having excellent color tone and mechanical strength from a polyester composite material contained a polyester and processing the recycled polyester again into a polyester composite material. The present invention has been made in consideration of the above-described circumstance, and an object of the present invention is to provide a method for producing a recycled polyester that makes it possible to obtain a recycled polyester having excellent color tone and mechanical strength by a method with a small environmental load, in which many processes, such as depolymerization, transesterification, or repolymerization, or a large amount of heat energy is not required unlike in the chemical recycling. In addition, another object of the present invention is to provide a method for producing a polyester composite material by which a polyester composite material is produced using the obtained recycled polyester.

Solution to Problem

As a result of conducting intensive studies to achieve the above-described objects, the present inventors found that when an impurity, such as a colorant or a surfactant, is removed by washing a polyester composite material with a specific washing solvent, the polyester composite material is then dissolved in a solvent capable of dissolving polyesters, a fiber or resin other than polyester and an impurity, such as a metal impurity, are removed by filtration, and the polyester composite material is then brought into contact with a solvent in which polyesters are not soluble, to precipitate a polyester, it is possible to collect a recycled polyester having excellent color tone and mechanical strength and a narrow molecular weight distribution without decomposing the polyester up to monomers, and completed the following invention of a method for producing a recycled polyester.

In addition, the present inventors have found that when a polyester in a polyester composite material is dissolved in a specific dissolving solvent, treated with an aggregating agent or with an aggregating agent and a filter aid, and subjected to solid-liquid separation to precipitate the polyester, it is possible to collect a recycled polyester having excellent color tone and mechanical strength and a narrow molecular weight distribution without decomposing the polyester up to monomers, and completed the following invention of a method for producing a recycled polyester.

That is, the present invention relates to the following inventions.

[1] A method for producing a recycled polyester from a polyester composite material, the method comprising the following step (A) to step (D):

step (A): a step of washing a polyester composite material using a washing solvent obtained by mixing a solvent (X1) composed of a phenolic solvent and/or a chlorine-based organic solvent and one or more solvents (Y1) selected from the group consisting of an aromatic hydrocarbon-based solvent, an aliphatic hydrocarbon-based solvent, a ketone-based solvent, an aldehyde-based solvent, an alcohol-based solvent, an ether-based solvent, and water;

step (B): a step of mixing the washed polyester composite material and a dissolving solvent containing a solvent (X2) composed of a phenolic solvent and/or a chlorine-based organic solvent to obtain a solution containing a polyester in the polyester composite material dissolved therein, and then subjecting the solution containing the polyester dissolved therein to solid-liquid separation to obtain a liquid component (L) containing the polyester dissolved therein;

step (C): a step of mixing the liquid component (L) and a poor solvent (PS) having a boiling point of 130°C or lower to precipitate the polyester, thereby obtaining a slurry, and then subjecting the slurry to solid-liquid separation to obtain a solid polyester; and

step (D): a step of drying the solid polyester to obtain a recycled polyester.

[2] The method for producing a recycled polyester according to [1], wherein in the step (B), the polyester in the polyester composite material is dissolved in the dissolving solvent, and then a nonpolar solvent having a dielectric constant of 1 or higher and 3 or lower is mixed therewith to obtain the solution containing the polyester dissolved therein.

[3] The method for producing a recycled polyester according to [1] or [2], wherein the polyester is one or more selected from the group consisting of polyethylene terephthalate, polytrimethylene terephthalate, polybutylene terephthalate, polyethylene naphthalate, polybutylene naphthalate, copolymers thereof, and copolymers thereof with a different resin.

[4] The method for producing a recycled polyester according to any of [1] to [3], wherein the polyester composite material contains a polyester and a further component that is one or more selected from the group consisting of a low-molecular-weight organic compound, a metal compound, an inorganic fine particle, a fiber other than polyester and a resin other than polyester, and the recycled polyester is a polyester obtained by removing the further component.

[5] The method for producing a recycled polyester according to [4], wherein the low-molecular-weight organic compound contains one or more selected from the group consisting of a colorant, a surfactant, an antistatic agent, and a flame retardant, the metal compound contains a matting agent and/or an ultraviolet absorber, the inorganic fine particle contains a pigment, the fiber other than polyester contains one or more selected from the group consisting of a natural fiber, an acrylic fiber, a rayon fiber, a polyurethane fiber, a nylon fiber, a polyethylene fiber, a polypropylene fiber, and a glass fiber, and the resin other than polyester contains one or more selected from the group consisting of a polyethylene resin, a polypropylene resin, a polyurethane resin, a polystyrene resin, a nylon resin, a polyvinyl chloride resin, and an acrylic resin.

[6] The method for producing a recycled polyester according to any of [1] to [5], wherein the polyester composite material is a polyester-containing fiber.

[7] The method for producing a recycled polyester according to [6], wherein the polyester-containing fiber contains at least a colorant, titanium oxide, and/or a fiber other than polyester, in the step (A), the polyester-containing fiber is bleached, and in the step (B), the titanium oxide and/or the fiber other than polyester is removed.

[8] The method for producing a recycled polyester according to any of [1] to [7], wherein the washing solvent has a pH of lower than 13.0.

[9] The method for producing a recycled polyester according to any of [1] to [8], wherein a washing temperature in the step (A) is 30°C or higher and 150°C or lower, and a dissolution temperature in the step (B) is 30°C or higher and 150°C or lower.

[10] The method for producing a recycled polyester according to any of [1] to [9], wherein the solvent (Y1) has a boiling point of 250°C or lower.

[11] The method for producing a recycled polyester according to any of [1] to [10], wherein a dissolution temperature in the step (B) is a temperature higher than a washing temperature in the step (A).

[12] The method for producing a recycled polyester according to any of [1] to [11], wherein a content of the solvent (X2) in the dissolving solvent in the step (B) is larger than a content of the solvent (X1) in the washing solvent in the step (A).

[13] The method for producing a recycled polyester according to any of [1] to [12], wherein the poor solvent (PS) is one or more selected from the group consisting of an aromatic hydrocarbon-based solvent, an aliphatic hydrocarbon-based solvent, a ketone-based solvent, an aldehyde-based solvent, an alcohol-based solvent, an ether-based solvent, and water.

[14] The method for producing a recycled polyester according to any of [1] to [13], wherein the solvent (Y1) is one or more selected from the group consisting of toluene, xylene, heptane, hexane, acetone, methanol, ethanol, ethylene glycol, propylene glycol, and water, and the poor solvent (PS) is one or more selected from acetone, toluene, methanol, ethanol, and water.

[15] The method for producing a recycled polyester according to any of [1] to [14], wherein a Ti content in the polyester composite is 500 ppm or more, and a Ti content in the recycled polyester is 100 ppm or less.

[16] The method for producing a recycled polyester according to any of [1] to [15], wherein an N content in the polyester composite is 400 ppm or more, and an N content in the recycled polyester is 80 ppm or less.

[17] The method for producing a recycled polyester according to any of [1] to [16], wherein before solid-liquid separation in the step (B), the solution containing the polyester dissolved therein and a filter aid are brought into contact with each other.

[18] The method for producing a recycled polyester according to any of [1] to [17], wherein before solid-liquid separation in the step (B), the solution containing the polyester dissolved therein and an aggregating agent are brought into contact with each other.

[19] A method for producing a recycled polyester from a polyester composite material, the method comprising the following step (B2), step (Z2), step (C2), and step (D2):

step (B2): a step of mixing the polyester composite material and a dissolving solvent containing a solvent (X2) composed of a phenolic solvent and/or a chlorine-based organic solvent to obtain a solution containing a polyester in the polyester composite material dissolved therein;

step (Z2); a step of bringing the solution containing the polyester dissolved therein and an aggregating agent into contact with each other, and then performing solid-liquid separation to obtain a liquid component (L2) containing the polyester dissolved therein;

step (C2): a step of mixing the liquid component (L2) and a poor solvent (PS) having a boiling point of 130°C or lower to precipitate the polyester, thereby obtaining a slurry, and then subjecting the slurry to solid-liquid separation to obtain a solid polyester; and

step (D2): a step of drying the solid polyester to obtain a recycled polyester.

[20] The method for producing a recycled polyester according to [19], wherein before solid-liquid separation in the step (Z2), the solution containing the polyester dissolved therein and a filter aid are brought into contact with each other.

[21] The method for producing a recycled polyester according to any of [18] to [20], wherein the aggregating agent is one or more selected from the group consisting of inorganic salts other than alkali metal salts and alkaline earth metal salts and polymer compounds.

[22] The method for producing a recycled polyester according to any of [18] to [21], wherein the aggregating agent is composed of an inorganic salt other than alkali metal salts and alkaline earth metal salts.

[23] The method for producing a recycled polyester according to [22], wherein the inorganic salt other than alkali metal salts and alkaline earth metal salts is one or more selected from the group consisting of iron(III) chloride, iron(II) sulfate, iron(III) sulfate, aluminum sulfate, and aluminum chloride.

[24] The method for producing a recycled polyester according to [21], wherein the solution containing the polyester dissolved therein is brought into contact with the aggregating agent composed of the inorganic salt other than alkali metal salts and alkaline earth metal salts, and is then brought into contact with the aggregating agent composed of the polymer compound.

[25] The method for producing a recycled polyester according to [21] or [24], wherein the polymer compound is one or more selected from the group consisting of polyacrylamide and polyethylene oxide.

[26] The method for producing a recycled polyester according to [17], [18], or [20], wherein the filter aid is one or more selected from the group consisting of activated carbon, activated clay, celite, silica gel, a synthetic adsorbent, bentonite, alumina, and zeolite.

[27] A method for producing a polyester composite material, the method comprising: a step of obtaining a recycled polyester by the method for producing a recycled polyester according to any of [1] to [26]; and a step of producing a polyester composite material using the obtained recycled polyester.

Advantageous Effects of Invention

According to the present invention, a method for producing a recycled polyester that makes it possible to obtain a recycled polyester having excellent color tone and mechanical strength by a method with a small environmental load that does not require many processes or a large amount of heat energy.

Brief Description of Drawings

[Figure 1] Figure 1 is a flowchart of one example of a first method for producing a recycled polyester (recycled PEs) of the present invention.

[Figure 2] Figure 2 is a flowchart for describing a step (B) in the first method for producing a recycled polyester of the present invention.

[Figure 3] Figure 3 is a flowchart of one example of the first method for producing a recycled polyester of the present invention when a polyester-containing fiber (PEs-containing fiber) is used as a polyester composite material (PEs composite material).

Description of Embodiments

Hereinafter, an embodiment of the present invention will be described, but the following description of a configuration condition is simply an example (typical example) of the embodiment of the present invention, and the present invention is not limited to the following contents unless the gist of the present invention is changed. In the case of using "to" to express a numerical range in the present specification, the expression is used to include numerical values or physical property values before and after the "to."

<Method for producing recycled polyester>

(First method for producing recycled polyester)

A first method for producing a recycled polyester according to the present invention is a method for producing a recycled polyester (hereinafter referred to as "the first method for producing a recycled polyester of the present invention" in some cases) that is a method for producing a recycled polyester from a polyester composite material, the method including the following step (A) to step (D);

step (A): a step of washing a polyester composite material using a washing solvent obtained by mixing a solvent (X1) composed of a phenolic solvent and/or a chlorine-based organic solvent and one or more solvents (Y1) selected from the group consisting of an aromatic hydrocarbon-based solvent, an aliphatic hydrocarbon-based solvent, a ketone-based solvent, an aldehyde-based solvent, an alcohol-based solvent, an ether-based solvent, and water;
step (B): a step of mixing the washed polyester composite material and a dissolving solvent containing a solvent (X2) composed of a phenolic solvent and/or a chlorine-based organic solvent to obtain a solution containing a polyester in the polyester composite material dissolved therein (hereinafter referred to as "PEs solution" in some cases), and then subjecting the PEs solution to solid-liquid separation to obtain a liquid component (L) containing the polyester dissolved therein;
step (C): a step of mixing the liquid component (L) and a poor solvent (PS) having a boiling point of 130°C or lower to precipitate the polyester, thereby obtaining a slurry, and then subjecting the slurry to solid-liquid separation to obtain a solid polyester; and
step (D): a step of drying the solid polyester to obtain a recycled polyester.

One characteristic of the first method for producing a recycled polyester according to the present invention is to remove impurities by a plurality of steps (that is, the step (A), the step (B), and the step (C)) using differences in solubility. The present inventors found that an impurity, such as a low-molecular-weight organic compound (a colorant, a surfactant, or the like), that can be contained in a polyester composite material can be dissolved and removed by washing the polyester composite material with a specific washing solvent (step (A)) before a polyester in the polyester composite material is dissolved. In addition, the present inventors found that a fiber or resin other than polyester and a metal impurity can be removed by dissolving and filtering the polyester after the polyester composite material is washed with the specific washing solvent (step (B)), and a recycled polyester having excellent color tone and mechanical strength can be collected by collecting the polyester by reprecipitation (step (C)) with no need of many processes or a large amount of heat energy as in chemical recycling. A recycled polyester can be produced at a low cost with a small amount of energy without decomposing a polyester up to monomers in a manner as in the first method for producing a recycled polyester of the present invention.

(Second method for producing recycled polyester)

A second method for producing a recycled polyester according to the present invention is a method for producing a recycled polyester (hereinafter referred to as "the second method for producing a recycled polyester of the present invention" in some cases) that is a method for producing a recycled polyester from a polyester composite material, the method including the following step (B2), step (22), step (C2), and step (D2);

step (B2): a step of mixing the polyester composite material and a dissolving solvent containing a solvent (X2) composed of a phenolic solvent and/or a chlorine-based organic solvent to obtain a solution containing a polyester in the polyester composite material dissolved therein (PEs solution),
step (Z2); a step of bringing the PEs solution and an aggregating agent into contact with each other, and then performing solid-liquid separation to obtain a liquid component (L2) containing the polyester dissolved therein,
step (C2): a step of mixing the liquid component (L2) and a poor solvent (PS) having a boiling point of 130°C or lower to precipitate the polyester, thereby obtaining a slurry, and then subjecting the slurry to solid-liquid separation to obtain a solid polyester, and
step (D2): a step of drying the solid polyester to obtain a recycled polyester.

One characteristic of the second method for producing a recycled polyester according to the present invention is to remove impurities by a plurality of steps (that is, the step (B2), the step (Z2), and the step (C2)). As a result of studies, the present inventors found that a component (a fiber or a resin other than a polyester, a metal impurity, an inorganic fine particle, or the like) that does not dissolve in a specific dissolving solvent in a polyester composite material can be separated from the polyester by dissolving the polyester in the polyester composite material in the solvent, but an inorganic fine particle having a small particle size is not captured as solid during solid-liquid separation regardless of the fact that the inorganic fine particle is insoluble in a dissolving solvent, and the inorganic fine particle tends to incorporate into liquid. In addition, the present inventors have found that when a PEs solution is treated with an aggregating agent before solid-liquid separation, it is possible to make the inorganic fine particles having a small particle size adhere or aggregate together, and the inorganic fine particle having a small particle size can be separated during solid-liquid separation. Therefore, in the second method for producing a recycled polyester of the present invention, a PEs solution is treated with an aggregating agent and then subjected to solid-liquid separation by the step (Z2). Furthermore, the polyester is collected by reprecipitation (step (C)), whereby an impurity that is soluble in a poor solvent (PS) and a polyester can be separated from each other.

In the present specification, "the first method for producing recycled polyester of the present invention" and "the second method for producing recycled polyester of the present invention" will be collectively referred to as "the method for producing a recycled polyester of the present invention" in some cases.

<Polyester composite material (PEs composite material)>

Hereinafter, a polyester composite material common to "the first method for producing recycled polyester of the present invention" and "the second method for producing recycled polyester of the present invention" will be described below.

The polyester composite material that is used in the present invention is a waste material containing a polyester and a further component other than polyester, and is a pre-consumer material or a post-consumer material.

(Polyester (PEs))

The kind of the polyester that is contained in the polyester composite material is not limited. The polyester is a polymer or copolymer obtained by causing the dehydration condensation of a dicarboxylic acid and a diol to form an ester bond. The polyester may be a homopolymer or a copolymer. Examples of the polyester include polyethylene terephthalate (PET), polytrimethylene terephthalate (PTT), polybutylene terephthalate (PBT), polyethylene naphthalate (PEN), polybutylene naphthalate (PBN), copolymers thereof, and the like. In addition, the polyester may be a copolymer with a different resin.

(Further component other than polyester)

The further component other than polyester that is contained in the polyester composite material is an impurity that is removed in any of the steps of the method for producing a recycled polyester of the present invention.

The further component other than polyester is a compound that is used as an additive at the time of producing a variety of products, a fiber other than polyester, a resin other than polyester, or the like. For example, as the polyester composite material, it is possible to use a composite material containing a polyester and one or more further components selected from the group consisting of a low-molecular-weight organic compound, a metal compound, an inorganic fine particle, a fiber other than polyester, and a resin other than polyester. The further component can be removed by the method for producing a recycled polyester of the present invention, and as a recycled polyester, the polyester can be obtained by removing the further component. Examples of the organic low-molecular-weight compounds include compounds that are used as colorants, antistatic agents, flame retardants, surfactants, antioxidants, lightfast agents, and the like, which normally have a molecular weight of 2000 or less. Examples of the metal compound include metal oxides, metal salts, and the like that are used as matting agents, ultraviolet absorbers, or the like. Examples of the inorganic fine particle include pigments such as carbon black. Examples of the fiber other than polyester include natural fibers, acrylic fibers, rayon fibers, polyurethane fibers, nylon fibers, polyethylene fibers, polypropylene fibers, acetate fibers, glass fibers, carbon fibers, and the like. Examples of the resin other than polyester include polyethylene resins, polypropylene resins, polyurethane resins, polystyrene resins, nylon resins, polyvinyl chloride resins, acrylic resins, and the like.

In the first method for producing a recycled polyester of the present invention, it is possible to efficiently remove a colorant (dye). Therefore, to materials containing at least a colorant as the further component other than polyester, it is more effective to apply the first method for producing a recycled polyester of the present invention.

In addition, in the second method for producing a recycled polyester of the present invention, it is possible to efficiently remove a pigment. Therefore, to materials containing at least a pigment as the further component other than polyester, it is more effective to apply the second method for producing a recycled polyester of the present invention.

The form of the polyester composite material is not particularly limited, and a fiber or resin molded product, a laminated product, or the like may be used. For example, a polyester-containing fiber is a composite material containing, in addition to a polyester fiber, a natural fiber (cotton, hemp, silk, or the like), a synthetic fiber (acrylic fiber, rayon, or the like), a variety of additives (a dye, a pigment, titanium oxide, and the like), and the like. In addition, a polyester-containing injection molded product, a polyester-containing laminated product, or the like is a composite material containing, in addition to a polyester, a resin other than polyester (polypropylene, polyethylene, polyurethane, acrylic resin, or the like), a glass fiber, a variety of additives, or the like. In addition, a product on which metal support, dyeing, a surface treatment with an organic substance, or the like has been performed to improve the function or designability of the polyester composite material is also the polyester composite material.

The content of the polyester in the polyester composite material is not particularly limited, but a material containing 10 mass% or more of a polyester in the polyester composite material is preferable, and a material containing 30 mass% or more of a polyester is more preferable. In addition, as the polyester composite material, one kind of material may be used or two or more kinds of materials may be used.

Specific examples of the polyester composite material include waste materials of polyester fiber products, such as clothes, bedding, sofas, curtains, carpets, cushions, mats, car interior seats, and aircraft interior seats, blow molded products, such as PET bottles, injection molded products and extrusion molded products that are used in electrical and electronic parts, automotive parts, and the like.

The polyester composite material that is used in the present invention is preferably small pieces of a material. When the polyester composite material is used in small pieces, the impurity removal efficiency improves, and the polyester composite material is easy to handle in the subsequent steps. The polyester composite material can be made into small (fine) pieces by one or a combination of arbitrary methods, such as shredding, pulverizing, crashing, and cutting, depending on the form, and the small pieces of the polyester composite material are a shredded product, a pulverized product, a crushed product, a cut product, or the like.

The small piece of the polyester composite material is preferably 5 cm × 5 cm or smaller, more preferably 3 cm × 3 cm or smaller, and still more preferably 2 cm × 2 cm or smaller. When the size of the polyester composite material is too large, impurity removal in the step (A) does not sufficiently proceeds or the polyester dissolution time in the step (B) becomes long, which is not preferable. "5 cm × 5 cm or smaller" means that the small piece is small enough to pass through a sieve having an opening size of 5 cm, "3 cm × 3 cm or smaller" means that the small piece is small enough to pass through a sieve having an opening size of 3 cm, and "2 cm × 2 cm or smaller" means that the small piece is small enough to pass through a sieve having an opening size of 2 cm. The lower limit thereof is not particularly limited but is 1 cm × 1 cm or larger.

The small pieces of the polyester composite material may be used as they are in the step (A) or the step (B2), but some impurities adhering to the surface of the polyester composite material can be easily removed by water washing, and therefore the small pieces of the polyester composite material may be thus washed with water and then used in the step (A) or the step (B2). For example, the step (A) or the step (B2) may be performed after a step of making the polyester composite material into small pieces and a step of washing the small pieces of the polyester composite material with water are performed. Examples of a water washing method include a method in which the small pieces of the polyester composite material are immersed in water, and the water is then removed. In consideration of the boiling point or the like of water, the temperature of the water during water washing is normally 80°C or lower.

<First method for producing recycled polyester>

Hereinafter, the first method for producing a recycled polyester according to the present invention will be described.

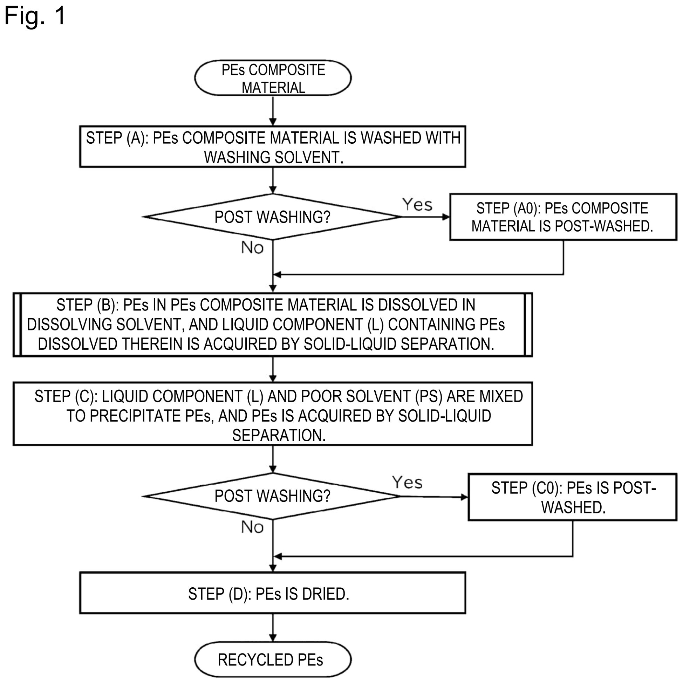

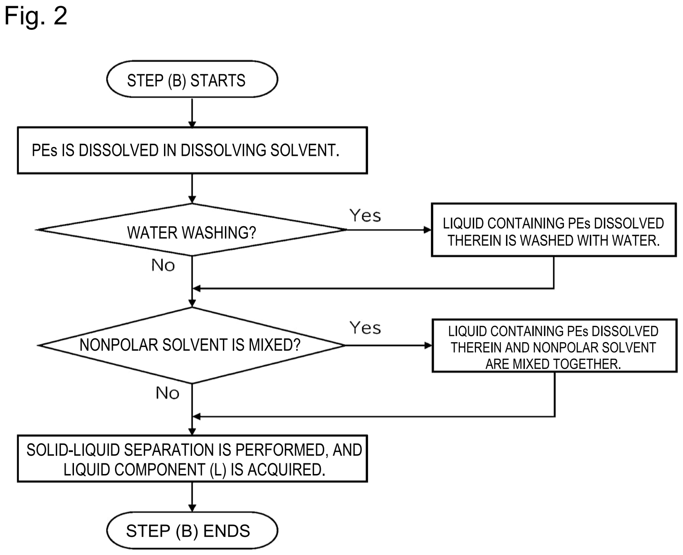

Figure 1 is the flowchart of one example of the first method for producing a recycled polyester (recycled PEs) of the present invention. Figure 2 is the flowchart for describing the step (B) in the first method for producing a recycled polyester of the present invention. Hereinafter, the first method for producing a recycled polyester of the present invention will be described with reference to Figure 1 and Figure 2.

<Step (A)>

The step (A) is a step of washing a polyester composite material using a washing solvent obtained by mixing a solvent (X1) composed of a phenolic solvent and/or a chlorine-based organic solvent and one or more solvents (Y1) selected from the group consisting of an aromatic hydrocarbon-based solvent, an aliphatic hydrocarbon-based solvent, a ketone-based solvent, an aldehyde-based solvent, an alcohol-based solvent, an ether-based solvent, and water.

In the step (A), impurities (hereinafter referred to as "impurities ($\alpha$)" in some cases) that are contained in the polyester composite material and are soluble in the washing solvent are dissolved and removed, and the polyester composite material from which the impurities ($\alpha$) have been removed is obtained. The impurities ($\alpha$) that are removed in the step (A) are components that are soluble in the washing solvent used and are a low-molecular-weight organic compound (for example, a low-molecular-weight organic compound having a molecular weight of 2000 or less) containing one or more selected from the group consisting of a colorant, a surfactant, an antistatic agent, an antioxidant, a lightfast agent, and a flame retardant, a nylon fiber, a thermoplastic polyurethane fiber, a nylon resin, a thermoplastic polyurethane resin, and the like.

Due to the step (A), among the impurities ($\alpha$), the colorant can be efficiently removed, and it is possible to significantly reduce the colorant in the polyester composite material. As the colorant, at the moment, a low-molecular-weight organic compound containing nitrogen (N), such as an azo dye, is in wide use, and the step (A) is particularly effective for removing the low-molecular-weight organic compound containing nitrogen.

The polyester composite material can be washed by bringing the polyester composite material and the washing solvent into contact with each other for a predetermined time and then subjecting the solution to solid-liquid separation. A solid component collected by the solid-liquid separation is the polyester composite material from which the impurities ($\alpha$) have been removed.

A method for bringing the polyester composite material and the washing solvent into contact with each other is not particularly limited, but a method in which the polyester composite material is immersed in the washing solvent is preferable. The order of the polyester composite material and the washing solvent that are supplied to a reaction container is not particularly limited, the washing solvent may be supplied after the supply of the polyester composite material, the polyester composite material may be supplied after the supply of the washing solvent, or the polyester composite material and the washing solvent may be supplied in parallel. In addition, while the polyester composite material is immersed in the washing solvent, the washing solvent may be left still, but is preferably stirred to dissolve the impurities ($\alpha$).

(Contact between polyester composite material and washing solvent)

The washing temperature (the temperature of the washing solvent when the polyester composite material and the washing solvent are brought into contact with each other) is preferably 30°C or higher. In addition, in order to weaken the interaction between polyester molecules and elute the impurities ($\alpha$) from amorphous regions, the impurities ($\alpha$) are preferably dissolved while being heated. Therefore, the polyester composite material is preferably washed at a temperature of 30°C or higher after being heated and more preferably washed at a temperature of 60°C or higher. When the polyester composite material is heated, the dissolution of the impurities ($\alpha$) adhering to the surface or the like of the polyester composite material is also likely to progress. On the other hand, when excess heat is applied thereto, since there is a possibility that the polyester may dissolve, the polyester composite material is preferably washed at 150°C or lower and more preferably washed at 90°C or lower to prevent the use of a large amount of heat energy. The washing temperature can be set to, for example, 30°C to 150°C or 60°C to 90°C.

The washing time (the contact time between the polyester composite material and the washing solvent) is set as appropriate depending on the washing temperature or the like, but is preferably five minutes or longer and more preferably 30 minutes or longer and is preferably two hours or shorter and more preferably one hour or shorter. The washing time can be set to, for example, five minutes to two hours or 30 minutes to one hour.

The amount of the washing solvent is not particularly limited; however, when the amount of the washing solvent is too small, since there is a case where the dissolution of the impurities ($\alpha$) becomes insufficient, the amount of the washing solvent is preferably 5 times by mass or more and more preferably 10 times by mass or more relative to the amount of the polyester composite material treated. In addition, when the amount of the washing solvent is too large, since a large amount of heat energy is required at the time of collecting the solvent, the amount of the washing solvent is preferably 20 times by mass or less and more preferably 15 times by mass or less relative to the amount of the polyester composite material treated. The amount of the washing solvent can be set to, for example, 5 times by mass or more and 20 times by mass or less or 10 times by mass or more and 15 times by mass or less.

(Washing solvent)

The washing solvent is a solvent mixture obtained by mixing a solvent (X1) composed of a phenolic solvent and/or a chlorine-based organic solvent and one or more solvents (Y1) selected from the group consisting of an aromatic hydrocarbon-based solvent, an aliphatic hydrocarbon-based solvent, a ketone-based solvent, an aldehyde-based solvent, an alcohol-based solvent, an ether-based solvent, and water.

The pH of the washing solvent is preferably lower than 13.0, preferably 12.5 or lower, more preferably 12.0 or lower, more preferably 11.5 or lower, and still more preferably 11.0 or lower.

In the step (A), the impurities ($\alpha$) in the polyester composite material that are soluble in the washing solvent are dissolved and removed without substantially dissolving or decomposing the polyester. Therefore, in the step (A), it is preferable not to dissolve the polyester, and it is normally considered that the impurities are preferably dissolved using a solvent having a low polyester solubility. However, as a result of studies, the present inventors found that even when the operation of the step (A) is performed using a solvent having a low polyester solubility, it is not possible to sufficiently remove the impurities ($\alpha$), such as a colorant or a surfactant. This was considered to be because the impurities ($\alpha$), such as

a colorant or a surfactant, also have incorporated into between the polyester molecules. As a result, the present inventors considered that it is important to weaken the intermolecular interactions in the amorphous regions of the polyester to elute the impurities ($\alpha$) between the molecules, conducted studies, and consequently found that when a phenolic solvent and/or chlorine-based organic solvent having a high polyester solubility is used as a part of the washing solvent, it is possible to weaken the intermolecular interactions in the amorphous regions and effectively elute the impurities ($\alpha$) between the molecules without substantially dissolving the polyester. The use of a solvent mixture obtained by mixing the solvent (X1) composed of a phenolic solvent and/or a chlorine-based organic solvent and the one or more solvents (Y1) selected from the group consisting of an aromatic hydrocarbon-based solvent, a ketone-based solvent, an aldehyde-based solvent, an alcohol-based solvent, an ether-based solvent, and water as the washing solvent in the step (A) is also one characteristic of the first method for producing a recycled polyester of the present invention.

The solvent (X1) composed of a phenolic solvent and/or a chlorine-based organic solvent is a solvent having an effect of weakening the intermolecular interaction of the polyester, and when the solvent (X1) is contained in a part of the washing solvent, the impurities ($\alpha$) in the polyester also become easy to dissolve in the washing solvent. Examples of the phenolic solvent include phenol, cresol, xylenol, ethylphenol, propylphenol, butylphenol, methoxyphenol, ethoxyphenol, propoxyphenol, butoxyphenol, benzylphenol, phenylphenol, chlorophenol, dichlorophenol, chloromethylphenol, and the like. In addition, examples of the chlorine-based organic solvent include methylene chloride, chloroform, chlorohexane, chloropropane, tetrachloroethane, chloropropenyl, chlorobutene, chloromethoxypropane, dichloroethylene, trichloroethylene, bromochloroethane, chlorobenzene, dichlorobenzene, chlorotoluene, bromochlorobenzene, chloropentane, chloroethoxybenzene, tetrachloroacetic acid, and the like. One or more of these solvents may be selected. Among them, the solvent (X1) is preferably one or more selected from the group consisting of phenol, cresol, methylene chloride, and chloroform.

The one or more solvents (Y1) selected from the group consisting of an aromatic hydrocarbon-based solvent, an aliphatic hydrocarbon-based solvent, a ketone-based solvent, an aldehyde-based solvent, an alcohol-based solvent, an ether-based solvent, and water dissolve the impurities ($\alpha$), have a low polyester solubility, and are thus capable of eluting the impurities ($\alpha$) that dissolve in the washing solvent without dissolving the polyester when the solvents (Y1) are contained in a part of the washing solvent. As the solvents (Y1), for example, it is possible to use aromatic hydrocarbon-based solvents such as toluene, xylene, ethylbenzene, diethylbenzene, 1-methylethylbenzene, and mesitylene; aliphatic hydrocarbon-based solvents such as hexane, heptane, octane, hexene, heptene, octene, cyclopentane, cyclohexane, cycloheptane, cyclohexene, cycloheptene, nonane, decane, and cyclooctane; ketone-based solvents such as acetone, methyl ethyl ketone, pentanone, hexanone, diethyl ketone, methyl isobutyl ketone, 3-penten-2-one, 2,4-pentanedione, cyclopropanone, cyclobutanone, heptanone, octanone, nonanone, decanone, hexanedione, 3-methyl-3-penten-2-one, cycloheptanone, cyclohexanone, 4-methylcyclohexanone, acetophenone, isophorone, and dimethylacetophenone; aldehyde-based solvents such as propionaldehyde, butyraldehyde, pentanal, hexanal, vinyl aldehyde, glyoxal, glyceraldehyde, isobutyraldehyde, succinaldehyde, heptanal, octanal, nonanal, decanal, benzaldehyde, phenylpropenal, perillaldehyde, and isopropylbenzaldehyde; alcohol-based solvents such as methanol, ethanol, propanol, isopropanol, isobutyl alcohol, tert-butyl alcohol, pentanol, hexanol, pentanediol, hexanediol, 3-ethyl-3 pentanol, ethylene glycol, propylene glycol, 1,4-butanediol, diethylene glycol, cyclohexanol, methylcyclohexanol, and benzyl alcohol; ether-based solvents such as diethyl ether, 1,4-dioxane, tetrahydrofuran, isopropyl methyl ether, methyl propyl ether, furan, p-dimethoxybenzene, cyclopentyl methyl ether, ethyl isopropyl ether, tert-butyl propyl ether, ethylene glycol diethyl ether, methyl phenyl ether, ethyl phenyl ether, diethylene glycol diethyl ether, diethylene glycol ethyl ether, cyclohexyl ethyl ether, dihexyl ether, benzyl ethyl ether, and benzofuran; and water. Only one of these solvents may be used or two or more thereof may be used. In addition, the boiling point of the solvent (Y1) is preferably 250°C or lower. The boiling point is more preferably 145°C or lower so that it is possible to reduce a thermal load due to distillation at the time of collecting the solvents from the industrial viewpoint. The solvent (Y1) is preferably capable of dissolving a low-molecular-weight organic compound, such as a colorant or a surfactant, and more preferably one or more selected from the group consisting of toluene, xylene, heptane, hexane, acetone, methanol, ethanol, ethylene glycol, propylene glycol, and water.

The mixing ratio between the solvent (X1) and the solvent (Y1) may be adjusted to an extent that the polyester does not substantially dissolve. For example, when the temperature of the washing solvent is high (for example, 90°C or higher or 90°C to 150°C), the fraction of the solvent (X1) is decreased, and when the temperature of the washing solvent is low (for example, 50°C or lower or 30°C to 50°C), the fraction of the solvent (X1) is increased. As described above, the mixing ratio therebetween can be arbitrarily adjusted and used depending on the temperature or the time at the time of eluting the impurities ($\alpha$). On the other hand, when the fraction of the solvent (X1) is too high, the polyester becomes easy to dissolve, and when the fraction of the solvent (Y1) is too high, there is a tendency that the elution of the impurities ($\alpha$) is likely to be insufficient. Therefore, the mass ratio between the solvent (X1) and the solvent (Y1) is preferably approximately 20:80 to 80:20, and the mass ratio between the solvent (X1) and the solvent (Y1) is more preferably set to 40:60 to 60:40, 45:55 to 55:45, or 50:50.

(Solid-liquid separation)

In the step (A), after the impurities (α) in the polyester composite material are dissolved in the washing solvent, solid-liquid separation for collecting the polyester composite material from the washing solvent is performed. In the case of collecting the polyester composite material by evaporating the washing solvent, since there is a concern that the impurities (α) dissolved in the washing solvent may be precipitated and remain in solid, the solid-liquid separation is preferably performed by a method in which the washing solvent is not evaporated. For example, as a solid-liquid separation method, it is possible to use a method in which a known method, such as filtration or centrifugation, or a mesh container, such as a basket or a colander, is used or the like. In the case of performing filtration, a method therefor is not particularly limited, any of filter paper, centrifugal filtration, cyclone filtration, a glass filter, a bag filter, a candle filter, or the like may be used, and the opening size of a filter medium is preferably 1 cm or larger. In the case of using a mesh container, it is preferable to dissolve the impurities (α) in the polyester composite material in the washing solvent in the mesh container mounted in a reaction container in which the step (A) is performed, then, take the mesh container containing the polyester composite material out, transfer the mesh container to a reaction device in which the next step is performed, and perform the next step. In addition, in the case of using the mesh container, the mesh container containing the polyester composite material may be mounted in the reaction container in which the step (A) is performed, or the polyester composite material may be injected into the mesh container after the mesh container is mounted in the reaction container in which the step (A) is performed.

<Step (A0) (post washing in step (A))>

The polyester composite material collected by the solid-liquid separation may be used as it is in the step (B), but it is preferable that the polyester composite material is further washed (post washing) after the step (A) and used in the step (B) since the impurities (α) are likely to remain on the surface of the polyester composite material. Therefore, a step (A0) of further washing the polyester composite material may be performed after the step (A). Specifically, the polyester composite material collected by the solid-liquid separation and a solvent for post washing are mixed and stirred together, and the solvent for post washing is then removed. This removes the impurities (α) adhering to the surface of the polyester composite material.

In the step (A0), it is preferable to use an organic solvent containing neither a phenolic solvent nor a chlorine-based organic solvent and/or water so that the polyester composite material is not dissolved. As the organic solvent, it is possible to use aromatic hydrocarbon-based solvents such as toluene and xylene; aliphatic hydrocarbons such as hexane; alcohol-based solvents such as methanol and ethanol; ketone-based solvents such as acetone; aldehyde-based solvents such as propionaldehyde; ether-based solvents such as diethyl ether, and the like, and these organic solvents may be jointly used. In addition, the boiling point of the organic solvent that is used as the solvent for post washing is preferably 210°C or lower, more preferably 130°C or lower, and still more preferably 80°C or lower so that it is possible to reduce a thermal load due to distillation at the time of collecting the solvents from the industrial viewpoint. Among them, the solvent for post washing is preferably one or more selected from the group consisting of acetone, toluene, hexane, methanol, ethanol, and water. The temperature of the solvent for post washing may be set as appropriate depending on the boiling point or the like of a solvent being used and is preferably 20°C to 80°C. The amount of the solvent for post washing used is preferably 2 times by mass or more and more preferably 5 times by mass or more relative to the amount of the polyester composite material.

The step (A0) may be performed a plurality of times. In the case of performing the step (A0) a plurality of times, the kinds or temperatures of solvents being used, the amounts of the solvents, and the like may be set to the same conditions or may be set to different conditions each time. For example, washing may be performed a plurality of times using an organic solvent, and washing may be then performed using water.

<Step (B)>

The step (B) is a step of mixing the washed polyester composite material and a dissolving solvent containing a solvent (X2) composed of a phenolic solvent and/or a chlorine-based organic solvent to obtain a PEs solution, and then subjecting the PEs solution to solid-liquid separation to obtain a liquid component (L) containing the polyester dissolved therein.

The polyester composite material after the step (A) contains an impurity (hereinafter referred to as "impurity (β)" in some cases) insoluble in the dissolving solvent that is used in the step (B), and this impurity (β) remains in the PEs solution as solid. Therefore, the PEs solution is a suspension containing this impurity (β) dispersed therein. When this PEs solution, which is a suspension, is subjected to solid-liquid separation, the PEs solution can be separated into a liquid component containing the polyester dissolved therein and a solid component containing the impurity (β). The impurity (β) is a component that is insoluble in the washing solvent in the step (A) and in the dissolving solvent in the step (B) and is a natural fiber such as cotton, hemp, or silk, a rayon fiber, an acrylic fiber, a polyethylene fiber, a polypropylene fiber, an acetate fiber, a glass fiber, a polyethylene resin, a polypropylene resin, a polystyrene resin, a thermosetting polyurethane resin, a polyvinyl chloride resin, an acrylic resin, a metal compound such as titanium oxide or silicon oxide, an inorganic fine particle such as carbon black, or the like.

(Mixing of polyester composite material and dissolving solvent)

The order of mixing the polyester composite material and the dissolving solvent is not particularly limited, the dissolving solvent may be supplied to a reaction container after the supply of the polyester composite material, the polyester composite material may be supplied to a reaction container after the supply of the dissolving solvent, or the polyester composite material and the dissolving solvent may be supplied in parallel. In addition, the polyester composite material and the dissolving solvent may be mixed together and then left still to dissolve the polyester, but it is preferable to dissolve the polyester by stirring the solution.

The dissolution temperature (a temperature at which the polyester is dissolved) is preferably 30°C or higher, more preferably 60°C or higher, and still more preferably 90°C or higher. The upper limit is not particularly limited, but the polyester is preferably dissolved at 150°C or lower and more preferably dissolved at 130°C or lower to prevent the use of a large amount of heat energy. The dissolution temperature can be set to, for example, 30°C to 150°C, 60°C to 150°C, or 90°C to 130°C. In addition, in a case where the washing solvent and the dissolving solvent have similar compositions, the dissolution temperature in the step (B) is preferably a temperature higher than the washing temperature in the step (A), which also depends on the composition of the washing solvent or the dissolving solvent. When the polyester is dissolved at a temperature higher than that in the step (A), the interaction between the polyester molecules weakens, and it becomes easy to separate and remove impurities between the molecules in the subsequent steps.

The time taken to dissolve the polyester is preferably 30 minutes or longer and more preferably one hour or longer and is preferably four hours or shorter and more preferably two hours or shorter. The dissolution time can be set to, for example, 30 minutes to four hours or one hour to two hours.

The amount of the dissolving solvent added is not particularly limited; however, when the amount of the dissolving solvent is too small, since a long time is taken to dissolve the polyester, the amount of the dissolving solvent added is preferably 5 times by mass or more and more preferably 10 times by mass or more relative to the amount of the polyester composite material treated. In addition, when the amount of the dissolving solvent is too large, since a large amount of heat energy is required at the time of collecting the solvent, the amount of the dissolving solvent added is preferably 30 times by mass or less and more preferably 20 times by mass or less relative to the amount of the polyester composite material treated. The amount of the dissolving solvent added can be set to, for example, 5 times by mass or more and 30 times by mass or less or 10 times by mass or more and 20 times by mass or less.

(Dissolving solvent)

The dissolving solvent is a solvent containing a solvent (X2) composed of a phenolic solvent and/or a chlorine-based organic solvent. Examples of the phenolic solvent include phenol, cresol, xylenol, ethylphenol, propylphenol, butylphenol, methoxyphenol, ethoxyphenol, propoxyphenol, butoxyphenol, benzylphenol, phenylphenol, chlorophenol, dichlorophenol, chloromethylphenol, and the like. In addition, examples of the chlorine-based organic solvent include methylene chloride, chloroform, chlorohexane, chloropropane, tetrachloroethane, chloropropenyl, chlorobutene, chloromethoxypropane, dichloroethylene, trichloroethylene, bromochloroethane, chlorobenzene, dichlorobenzene, chlorotoluene, bromochlorobenzene, chloropentane, chloroethoxybenzene, tetrachloroacetic acid, and the like. One or more of these solvents may be selected. Among these, the solvent (X2) is preferably one or more selected from the group consisting of phenol, cresol, methylene chloride, and chloroform. As the solvent (X2) in the dissolving solvent, the same solvent as the solvent (X1) in the washing solvent may be used, or a solvent different therefrom may be used. In addition, the dissolving solvent may be composed of the solvent (X2) or may contain a solvent (hereinafter referred to as "solvent (Y2)") other than the solvent (X2) as long as the dissolving solvent is capable of dissolving the polyester.

In a case where the dissolving solvent contains the solvent (Y2) (a different solvent other than the solvent (X2)), the boiling point of the solvent (Y2) is preferably 250°C or lower. The boiling point is more preferably 145°C or lower from the viewpoint of collecting the solvent. For example, when the polyester dissolves, since the viscosity of the solution increases, the solvent (Y2) may be added to the solvent (X2) for the purpose of improving the fluidity of the polyester dissolving solvent. Examples of the solvent (Y2) include aromatic hydrocarbon-based solvents such as toluene and xylene; aliphatic hydrocarbons such as hexane; ketone-based solvents such as acetone; aldehyde-based solvents such as propionaldehyde; alcohol-based solvents such as methanol, ethanol, ethylene glycol, and propylene glycol; ether-based solvents such as diethyl ether; and the like. The solvent (Y2) is preferably one or more selected from the group consisting of toluene, xylene, hexane, ethanol, ethylene glycol, and propylene glycol and more preferably toluene.

In a case where the dissolving solvent contains the solvent (Y2) in addition to the solvent (X2), the order of mixing the solvent (X2) and the solvent (Y2) with the polyester composite material is not particularly limited. The polyester composite material, the solvent (X2), and the solvent (Y2) may be mixed in parallel to dissolve the polyester. In addition, a liquid mixture of the solvent (X2) and the solvent (Y2) and the polyester composite material may be mixed together to dissolve the polyester. In addition, the polyester composite material and the solvent (X2) may be mixed together to dissolve the polyester to a certain extent, and the solvent (Y2) or a liquid mixture of the solvent (X2) and the solvent (Y2) may be then mixed.

Since there is a need to dissolve the polyester in the step (B), in the dissolving solvent, the content of the solvent (X2) in the dissolving solvent is normally equal to or larger than the content of the solvent (X1) in the washing solvent used in the step (A) and is preferably larger than the content of the solvent (X1) in the washing solvent used in the step (A), which also depends on the dissolution temperature or the like. The content of the solvent (X1) or the solvent (X2) refers to the total content of phenolic solvent and the chlorine-based organic solvent; however, in a case where the phenolic solvent alone is contained, the content is the same as the content of the phenolic solvent, and in a case where the chlorine-based organic solvent alone is contained, the content is the same as the content of the chlorine-based organic solvent.

In addition, when the fraction of the solvent (X2) in the dissolving solvent is too small, since it becomes difficult to dissolve the polyester or a high temperature is required, the content of the solvent (X2) in the dissolving solvent is preferably larger than the content of the solvent (X1) in the washing solvent that is used in the step (A) and 60 mass% or more thereof. The content of the solvent (X2) in the dissolving solvent is preferably as high as possible, such as 65 mass% or more, 70 mass% or more, 75 mass% or more, 80 mass% or more, 85 mass% or more, 90 mass% or more, or 95 mass% or more to improve the polyester solubility.

As shown in Figure 2, a liquid obtained by dissolving the polyester in the polyester composite material in the dissolving solvent may be used as the PEs solution, or a liquid obtained by performing an operation, such as water washing or mixing with a nonpolar solvent, on the obtained liquid may be used as the PEs solution.

(Water washing after dissolution of polyester)

When the polyester is dissolved in the dissolving solvent and then washed with water, it is possible to improve the efficiency of removing an impurity, such as titanium oxide, an alkali metal or an alkaline earth metal. Specifically, the water washing after the dissolution of the polyester is to dissolve the polyester in the polyester composite material in the dissolving solvent, then, mix the solution with water, stir the mixture for a predetermined time, then, leave the mixture still to separate the mixture into two phases, remove a water phase, and obtain the PEs solution that is an organic phase. Normally, the stirring time is 10 minutes or longer, and the time of the mixture being left still is 10 minutes or longer. In addition, when the amount of water is too large, there is a possibility that the polyester may be precipitated, and when the amount of water is too small, the impurity removal effect is reduced, and the mass of the water is thus preferably 0.1 times or more and 0.5 times or less of the mass of the dissolving solvent. In addition, the water washing step may be repeated a plurality of times, such as three or more times.

(Mixing with nonpolar solvent)

A metal compound that can be contained as an ultraviolet absorber or a matting agent has a small size (particle size), and there is a concern that the metal compound may not be captured with a filter medium when filtration or the like is performed, but when a nonpolar solvent having a dielectric constant of 1 or higher and 3 or lower is mixed with the PEs solution, the metal compound is aggregated, and it is possible to make the metal compound large enough to be easily removed by solid-liquid separation. Therefore, a liquid obtained by dissolving the polyester in the dissolving solvent, and then mixing a nonpolar solvent having a dielectric constant of 1 or higher and 3 or lower therewith is preferably used as the PEs solution. Examples of the nonpolar solvent having a dielectric constant of 1 or higher and 3 or lower include toluene, xylene, hexane, cyclohexane, octane, styrene, benzene, biphenyl, 1,4-dioxane, 1,3-cyclohexanediene, and naphthalene, and toluene and/or xylene is preferable. The temperature during the mixing is preferably 50°C to 130°C and may be set to the same temperature as the dissolution temperature or set to a different temperature. In addition, after the mixing with the nonpolar solvent, the mixture is preferably stirred for 10 minutes to one hour. When the amount of the nonpolar solvent is too small, there is almost no aggregation effect, and when the amount is too large, there is a possibility that the polyester may be precipitated. Therefore, the lower limit of the mass of the nonpolar solvent is preferably 0.5 times or more, more preferably once or more, and still more preferably 1.5 times or more of the mass of the dissolving solvent. In addition, the upper limit thereof is preferably five times or less, more preferably four times or less, and still more preferably three times or less of the mass of the dissolving solvent and may be 2.5 times or less or twice or less. The mass of the nonpolar solvent can be set to, for example, 0.5 times to five times, once to four times, or twice to three times relative to the mass of the dissolving solvent.

(Contact between filter aid and/or aggregating agent)

In addition, a step (Z) of treating the PEs solution with a filter aid and/or an aggregating agent may be provided when the PEs solution is prepared or after the PEs solution is prepared.

In a case where the particle size of the impurity (β) insoluble in the dissolving solvent that is used in the step (B) is small, regardless of the fact that the impurity (β) is solid, the impurity (β) cannot be captured by solid-liquid separation, and there is a tendency that the impurity (β) remains in the liquid component (L). Particularly, a pigment having a small particle size, such as carbon black, tends to remain. Therefore, in order to improve the efficiency of removing an impurity having a small particle size, such as a pigment, it is preferable to bring the PEs solution and a filter aid into contact with each other and/or to bring the PEs solution and an aggregating agent into contact with each other before the solid-liquid separation in the step (B). When the PEs solution and a filter aid and/or an aggregating agent are brought into contact with each other, and the coloring components, such as the pigment, are adsorbed or aggregated together before the solid-liquid separation in the step (B), it is possible to achieve a state where an impurity is easy to capture by filtration or the like.

A method for bringing the PEs solution and the filter aid and/or the aggregating agent is not particularly limited as long as the filter aid and/or the aggregating agent comes into contact with the PEs solution, and examples thereof include a method in which a PEs solution is obtained and a filter aid and/or an aggregating agent is added into a reactor containing the PEs solution and mixed with the PEs solution, a method in which a column is packed with a filter aid and the PEs solution is circulated therein, a method in which a filter aid and/or an aggregating agent is added and mixed at the time of obtaining the PEs solution, and the like. These methods may be combined together.

Examples of the filter aid include activated carbon, activated clay, bentonite, celite, alumina, silica gel, zeolite, a synthetic adsorbent, and the like. In a case where the amount of the filter aid added in the case of being mixed into the reactor is small, since the adsorption of a pigment or the like does not sufficiently progress, the amount of the filter aid added is preferably 1 mass% or more, more preferably 5 mass% or more, and still more preferably 15 mass% or more relative to the mass of the polyester composite material. In a case where the amount added is small, adsorption does not sufficiently progress. On the other hand, when the amount of the filter aid added is large, for example, in a case where filtration is performed as the solid-liquid separation in the step (B), since there is a possibility that the filter aid may leak, the amount of the filter aid added is preferably 500 mass% or less and more preferably 250 mass% or less relative to the mass of the polyester composite material. The amount of the filter aid relative to the polyester composite material can be set to, for example, 1 mass% to 500 mass%, 5 mass% to 500 mass%, or 15 mass% to 250 mass%.

Regarding the lower limit value of the amount of the aggregating agent added in the case of being used, since there is a sufficient effect at a small amount, the amount of the aggregating agent added is preferably 0.1 mass% or more and more preferably 0.5 mass% or more relative to the mass of the polyester composite material. On the other hand, when the amount of the aggregating agent added is too large, since an impurity derived from the aggregating agent remains in the PEs solution, and there is a concern that the color tone and mechanical strength of a final recycled polyester may deteriorate, the amount of the aggregating agent added is preferably 20 mass% or less and more preferably 10 mass% or less relative to the mass of the polyester composite material. The amount of the aggregating agent relative to the polyester composite material can be set to, for example, 0.1 mass% to 20 mass% or 0.5 mass% to 10 mass%.

The aggregating agent neutralizes the charges of impurities, such as the pigment, dispersed in the PEs solution, thereby promoting the adsorption and aggregation of the impurities and enabling the impurities to be enlarged up to a particle size at which the impurities can be captured in the solid-liquid separation. Examples of aggregating agents that can be used include one or more selected from the group consisting of inorganic salts other than alkali metal salts and alkaline earth metal salts and polymer compounds that dissolve polyester. Examples of the inorganic salts other than alkali metal salts and alkaline earth metal salts include iron(III) chloride, iron(II) sulfate, iron(III) sulfate, aluminum chloride, aluminum sulfate, titanium oxide, copper(I) sulfate, copper(II) sulfate, copper(I) chloride, copper(II) chloride, zinc sulfate, and the like, and one or more selected from the group consisting of iron(III) chloride, iron(II) sulfate, iron(III) sulfate, aluminum sulfate, and aluminum chloride are preferable. In addition, a mixture of inorganic salts that are commercially available as aggregating agents may also be used. Particularly, in the case of promoting the adsorption and aggregation of a pigment, such as carbon black, having a small particle size, the adsorption and aggregation are easy to promote when inorganic salts having relatively close molecular sizes are used.

The inorganic salts are capable of neutralizing charges; however, in a case where the particle sizes of aggregated particles are small, a polymer compound, such as an anionic polymer compound, a cationic polymer compound, or a nonionic polymer compound, may be added. That is, the PEs solution is preferably brought into contact with an aggregating agent composed of an inorganic salt other than alkali metal salts and alkaline earth metal salts and then brought into contact with an aggregating agent composed of a polymer compound. Particles dispersed in the PEs solution adhere to polymer chains, and the particle sizes can be enlarged. What has been described above shows that in a case where there is a need to remove an impurity having a relatively small particle size, such as a pigment, when an inorganic salt is added first, and a polymer aggregating agent is then added, it is possible to effectively enlarge the impurity up to a particle size at which the impurity can be captured in the solid-liquid separation in the step (B). Typical examples of the polymer compound include polyacrylamide, polyethylene oxide, and the like.

It is preferable to jointly use the filter aid and the aggregating agent, and it is preferable to bring the PEs solution and the filter aid into contact with each other and bring the PEs solution and the aggregating agent into contact with each other before the solid-liquid separation in the step (B). In the case of using the filter aid and the aggregating agent in combination, the PEs solution may be treated with the filter aid and then treated with the aggregating agent, the PEs solution may be treated with the aggregating agent and then treated with the filter aid, or the PEs solution may be treated with the filter aid and the aggregating agent at the same time. In addition, the method for bringing the PEs solution and the filter aid into contact with each other and the method for bringing the PEs solution and the aggregating agent into contact with each other may be different methods.

Regarding the contact time, when the time is too short, since adsorption or aggregation does not sufficiently progress, the contact time is preferably 20 minutes or longer and more preferably 30 minutes or longer. On the other hand, when the time is too long, since the impurity is eluted from the added filter aid or aggregating agent, the contact time is preferably 180 minutes or shorter and more preferably 120 minutes or shorter. The contact time can be set to, for example, 20 minutes to 180 minutes or 30 minutes to 120 minutes.

When the PEs solution is treated with the filter aid and/or the aggregating agent not only in the step (A) but also in the step (B), it is possible to sufficiently remove an impurity that cannot be removed in the step (A) .

(Solid-liquid separation)

A solid-liquid separation method is not particularly limited, examples thereof include known methods, such as filtration and centrifugation, and filtration is preferable. A method for filtering the PEs solution is not particularly limited, and any of filter paper, centrifugal filtration, cyclone filtration, a glass filter, a bag filter, a candle filter, or the like may be used. In addition, the filter may be used in a plurality of stages or in a plurality of methods. The smallest opening size of a filter medium is preferably 5 $\mu$m or less, more preferably 3 $\mu$m or less, and still more preferably 1 $\mu$m or less. In addition, the smallest opening size of the filter medium is preferably 0.1 $\mu$m or more and more preferably 0.5 $\mu$m or more. In a case where the opening size is too large, the removal of a foreign matter becomes insufficient, and when the opening size is too small, there is a tendency that the filterability becomes poor.

The solid-liquid separation may be performed at room temperature or may be performed under a heating condition. The filtration may be room-temperature filtration or heating filtration, but is preferably heating filtration to prevent the precipitation of the polyester. The temperature of a filtrate is preferably maintained at 50°C or higher and more preferably maintained at 80°C or higher. In addition, in order to prevent the deterioration of the polyester due to a thermal load, the upper limit is preferably 110°C or lower and more preferably 100°C or lower. The temperature of the filtration during the solid-liquid separation can be set to, for example, 50°C to 110°C or 80°C to 100°C.

<Step (C)>

The step (C) is a step of mixing the liquid component (L) and a poor solvent (PS) having a boiling point of 130°C or lower to precipitate the polyester, thereby obtaining a slurry, and then subjecting the slurry to solid-liquid separation to obtain a solid polyester.

When the poor solvent (PS) is mixed in, the polyester is precipitated as solid, but an impurity that is soluble in the poor solvent (PS) remains dissolved without being precipitated. When the poor solvent (PS) is appropriately selected, it is possible to make the impurity remain dissolved in the liquid component (L) while precipitating the polyester and to remove the impurity that has dissolved in the poor solvent (PS) by solid-liquid separation. The impurity that can be removed by being left dissolved without being precipitated in the step (C) is the impurity ($\beta$), such as an acrylic fiber or an acrylic resin, that has slightly dissolved and could not be sufficiently removed in the step (B), the impurities ($\alpha$) that could not be sufficiently removed in the step (A), or the like.

In addition, when the poor solvent (PS) has a boiling point of 130°C or lower, it is easy to remove the solvent in the step (D), and it is possible to reduce a thermal load due to distillation at the time of collecting the solvent from the industrial viewpoint. The boiling point of the poor solvent (PS) is preferably 100°C or lower.

(Poor solvent)

The poor solvent (PS) that is used in the step (C) is a poor solvent having a boiling point of 130°C or lower and having a poor polyester solubility. The poor solvent (PS) is not particularly limited as long as the solvent has a boiling point of 130°C or lower and is capable of precipitating a polyester, but a solvent having a boiling point of 130°C or lower other than phenolic solvents and chlorine-based organic solvents is normally used, and one or more selected from the group consisting of an aromatic hydrocarbon-based solvent, an aliphatic hydrocarbon-based solvent, a ketone-based solvent, an aldehyde-based solvent, an alcohol-based solvent, an ether-based solvent, and water is preferable. Examples of the poor solvent (PS) include aromatic hydrocarbon-based solvents such as toluene; aliphatic hydrocarbon-based solvents such as hexane, heptane, octane, hexene, heptene, octene, cyclopentane, cyclohexane, cycloheptane, cyclohexene, and cycloheptene; ketone-based solvents such as acetone, methyl ethyl ketone, pentanone, hexanone, diethyl ketone, methyl isobutyl ketone, 3-penten-2-one, cyclopropanone, cyclobutanone, and dimethylacetophenone; aldehyde-based solvents such as propionaldehyde, butylaldehyde, pentanal, hexanal, vinyl aldehyde, glyoxal, isobutyraldehyde, and succinaldehyde; alcohol-based solvents such as methanol, ethanol, propanol, isopropanol, isobutyl alcohol, and tert-butyl alcohol; ether-based solvents such as diethyl ether, 1,4-dioxane, tetrahydrofuran, isopropyl methyl ether, methyl propyl ether, furan, cyclopentyl methyl ether, ethyl isopropyl ether, and tert-butyl propyl ether; water; and the like. Only one of these solvents may be used or two or more thereof may be used. Among them, one or more selected from the group consisting of acetone, toluene, methanol, ethanol, and water is preferably used as the poor solvent (PS).

The mixing ratio between the liquid component (L) and the poor solvent (PS) is not particularly limited as long as the polyester can be precipitated, but the polyester cannot be sufficiently precipitated when the amount of the poor solvent is too small or too large relative to the solvent (X2) in the liquid component (L). Therefore, the mass ratio between the solvent (X2) in the liquid component (L) and the poor solvent is preferably 1:0.5 to 1:10 and more preferably 1:1 to 1:5. Since the content of the solvent (X2) in the liquid component (L) is substantially the same as the content of the solvent (X2) in the dissolving solvent, the amount of the poor solvent (PS) may be set as appropriate depending on the content of the solvent (X2) in the dissolving solvent, and the mass ratio of the poor solvent (PS) to the solvent (X2) in the dissolving solvent is preferably 0.5 to 10 and more preferably 1 to 5.

(Precipitation of polyester)

In the step (C), normally, the liquid component (L) and the poor solvent (PS) are mixed together, and a liquid mixture is then stirred for a predetermined time, whereby polyester is precipitated to obtain a slurry. Polyester that is precipitated is normally a polyester crystal having a crystallized structure at least in part. A method for mixing the liquid component (L) and the poor solvent (PS) is not particularly limited, and the poor solvent (PS) may be supplied to the liquid component (L), or the liquid component (L) may be supplied to the poor solvent (PS). From the viewpoint of enabling the slow precipitation of polyester and making it difficult to take an impurity in polyester, a method in which the poor solvent (PS) is supplied to the liquid component (L) is preferable, and a method in which the poor solvent (PS) is supplied to the liquid component (L) by dropwise addition is more preferable. In the case of supplying two or more poor solvents (PS) to the liquid component (L), the two or more poor solvents (PS) may be mixed together and supplied or may be each supplied.

Since the ratio of solid (polyester) to liquid increases along with the precipitation of polyester, the stirring efficiency tends to decrease. In order to suppress such a decrease in the stirring efficiency along with the precipitation of the polyester, the liquid component (L) and the poor solvent (PS) are preferably mixed together while the temperature is controlled and more preferably mixed together by dropwise addition while the temperature is controlled so that a polyester is slowly precipitated and the particle size of each solid particle becomes uniform.

In order to slowly precipitate polyester, it is preferable to mix the liquid component (L) and the poor solvent (PS) after the temperature of the liquid in a reaction container in which the step (C) is performed is made to be higher than 20°C and 100°C or lower. In the case of supplying the liquid component (L) to the poor solvent (PS), the temperature of the poor solvent (PS) is preferably higher than 20°C, more preferably 30°C or higher, and more preferably 50°C or higher while also depending on the boiling point of the poor solvent (PS) or the liquid component (L). In addition, in order to suppress the deterioration of the polyester, the lower limit thereof is preferably 100°C or lower and more preferably 80°C or lower. In addition, in the case of supplying the poor solvent (PS) to the liquid component (L), the temperature of the liquid component (L) is preferably 50°C or higher and 100°C or lower and preferably 60°C or higher and 80°C or lower while also depending on the boiling point of the poor solvent (PS) or the liquid component (L).

The supply speed can be set as appropriate in a range of not exceeding the above-described temperature depending on the size of the reaction container, the amount of the liquid, or the like, but is preferably set to a speed at which the full amount can be supplied within two hours. In addition, when the supply speed is too fast, growth of solid particles abruptly progresses, and an impurity is easy to be taken in. Therefore, the supply speed is preferably set to a speed at which the full amount can be supplied for 0.25 hours or longer. That is, the supply time is preferably 0.25 to two hours and more preferably 0.5 to 1.5 hours. The supply time refers to a time necessary to supply the full amount of the liquid component (L) in the case of supplying the liquid component (L) to the poor solvent (PS) and refers to a time necessary to supply the full amount of the poor solvent (PS) in the case of supplying the poor solvent (PS) to the liquid component (L).

In the step (C), it is preferable that after the liquid component (L) and the poor solvent (PS) are mixed together, the liquid mixture is cooled to a predetermined maturing temperature of 20°C or lower, and the maturing temperature is then maintained to precipitate polyester. The maturing temperature is preferably 20°C or lower and more preferably 10°C or lower. The cooling speed is preferably 5 °C/minute or slower, preferably 3 °C/minute or slower, and still more preferably 1 °C/minute or slower. When the time during which the maturing temperature is maintained (maturing time) is too short, since polyester is not sufficiently precipitated, and there is a possibility that the yield of a recycled polyester may be decreased, the time is preferably 0.5 hours or longer and more preferably 1.5 hours or longer. In addition, after a certain time, an increase in the amount of polyester precipitated is small, and the upper limit of the maturing time is thus normally three hours or shorter.

(Separation of polyester)

In the step (C), after a slurry in which polyester has been precipitated is obtained, the slurry is separated into solid and liquid, and a solid polyester is collected. The slurry can be separated into solid and liquid by a known method, such as filtration or centrifugation, and filtration is preferable. Polyester composite materials often contain a low-molecular-weight polyester incorporated therein, but filtration also makes it possible to preferentially remove the low-molecular-weight polyester and makes it possible to obtain a recycled polyester having a small molecular weight distribution. For the filtration, any of filter paper, centrifugal filtration, cyclone filtration, a glass filter, a bag filter, a candle filter, or the like may be used. In addition, the filter may be used in a plurality of stages or in a plurality of methods. In a case where the opening size of a filter medium is too large, the removal of a foreign matter becomes insufficient, and when the opening size is too small, there is a tendency that the filterability becomes poor. Therefore, the smallest opening size of the filter medium is preferably 15 μm or less, more preferably 10 μm or less, and still more preferably 5 μm or less. In addition, the smallest opening size of the filter medium is preferably 1 μm or more and more preferably 3 μm or more.

<Step (C0) (post washing in step (C))>

The solid polyester collected by solid-liquid separation may be dried in the step (D) as it is, but there is a possibility that an impurity may adhere to the surface of the polyester, and it is thus preferable to further wash the polyester (post washing) and dry the polyester in the step (D). Therefore, a step (C0) of further washing the polyester may be performed after the step (C). Specifically, in the step (C0), the solid polyester collected by solid-liquid separation and a solvent for post washing are mixed and stirred together, and the solvent for post washing is removed. As a result, the impurity adhering to the surface of polyester is removed.
As the solvent for post washing, it is possible to use solvents that can be used as the poor solvent (PS) in the step (C), and one or more selected from the group consisting of acetone, toluene, methanol, ethanol, and water are preferably used. The solvent for post washing and the poor solvent (PS) in the step (C) may be the same as or different from each other. Since it is easy to remove the solvent in the step (D), the boiling point of the solvent for post washing is preferably 100°C or lower and more preferably 60°C or lower. The temperature of the solvent for post washing may be set as appropriate depending on the boiling point of the solvent being used or the like, but is preferably 25°C to 80°C. The amount of the solvent for post washing used is preferably 2 times by mass or more and more preferably 5 times by mass or more relative to the amount of the solid polyester. In addition, the step (C0) may be performed a plurality of times. In the case of performing the step (C0) a plurality of times, the kind or temperature of the solvent being used, the amount of the solvent, and the like may be set to the same conditions or may be set to different conditions each time.

<Step (D)>

The step (D) is a step of drying the solid polyester to obtain a recycled polyester. A drying method is not particularly limited, a known method can be used, and the drying method may be vacuum drying or drying at normal pressure. The drying temperature and the drying temperature can be determined as appropriate, and it is possible to dry the solid polyester, for example, at 50°C to 120°C for 2 to 15 hours.

<Recycling of solvent>

In the case of obtaining a recycled polyester on an industrial scale, the solvent used in each step may be separated from the impurity by distillation, collected, and reused. For example, for the washing solvent used in the step (A), the impurities and the solvent are separated by distillation, and the collected solvent may be used again in the step (A). Similarly, in the liquid that is separated from the polyester by the solid-liquid separation in the step (C) as well, the dissolving solvent or the poor solvent (PS) is also contained, and is thus collected by distillation and may be recycled and used in the step (B) or the step (C).

<Production of recycled polyester from polyester-containing fiber>

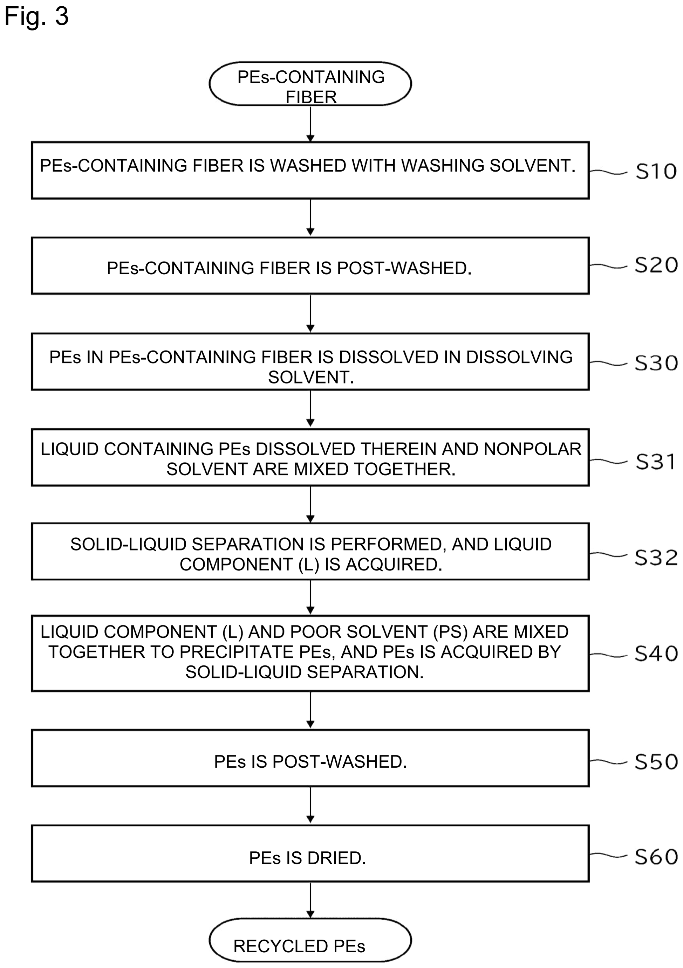

Figure 3 is the flowchart of one example of the first method for producing a recycled polyester (recycled PEs) of the present invention when a polyester-containing fiber (PEs-containing fiber) is used as the polyester composite material. The production method shown in Figure 3 has a step (S10) of washing the polyester-containing fiber with a washing solvent, a step (S20) of post-washing the polyester-containing fiber, a step (S30) of dissolving a polyester in the polyester-containing fiber in a dissolving solvent, a step (S31) of mixing a liquid containing the polyester dissolved therein and a nonpolar solvent having a dielectric constant of 1 or higher and 3 or lower, a step (S32) of subjecting the PEs solution into which the nonpolar solvent has been mixed to solid-liquid separation to obtain a liquid component (L) containing the polyester dissolved therein, a step (S40) of mixing the liquid component (L) and a poor solvent (PS) to precipitate the polyester and then obtaining the polyester by solid-liquid separation, a step (S50) of post-washing the polyester, and a step (S60) of drying the polyester.

The polyester-containing fiber is almost all dyed or colored with a dye or a pigment. In addition, the polyester-containing fiber contains an antistatic agent, an ultraviolet absorber, a matting agent, a flame retardant, a surfactant, an antioxidant, a lightfast agent, or the like as an additive, and as the ultraviolet absorber or the matting agent, a metal oxide, particularly, titanium oxide, is often kneaded into the fiber. In the case of producing a recycled polyester from the polyester-containing fiber, bleaching (removal of a colorant) in the polyester-containing fiber and removal of the metal oxide are particularly important. In a case where the recycled polyester has been colored, since a larger amount of a dye than ever is required to process the recycled polyester into a target color, there is a need to sufficiently remove the dye and bleach the recycled polyester. In addition, when the recycled polyester contains a metal oxide, particularly, titanium oxide, since the metal oxide serves as a nucleating agent, crystallization is likely to proceed, and deterioration of the mechanical strength is caused, and there is thus a need to sufficiently remove the metal oxide. The present inventors found that when a dyed polyester-containing fiber is treated with the above-described specific washing solvent before the polyester therein is dissolved, it is possible to efficiently remove a dye and bleach the polyester-containing fiber. In addition, the present inventors found that when the polyester in the polyester-containing fiber is dissolved in the above-described specific dissolving solvent, and a nonpolar solvent having a dielectric constant of 1 or higher and 3 or lower is then mixed therewith, it is possible to aggregate the metal oxide and make the metal oxide large enough to be easily captured by filtration. From these findings, a recycled polyester is preferably produced from the polyester-containing fiber by the production method shown in Figure 3.

(S10)

S10 is a step of washing the polyester-containing fiber with a washing solvent. S10 is the step (A) of the first method for producing a recycled polyester of the present invention and can be performed by the same method as for the step (A). The polyester-containing fiber may be a pure polyester fiber or may be a fiber containing a polyester fiber and a fiber other than polyester, and a shredded product obtained by shredding the polyester-containing fiber with a shredder is preferably used. In S10, a low-molecular-weight organic compound, such as a colorant, an antistatic agent, a flame retardant, a surfactant, an antioxidant, or a lightfast agent, or the impurities ($\alpha$), such as a nylon fiber or a polyurethane fiber, can be removed by being dissolved in a washing solvent.

Particularly, in order to more efficiently remove the colorant, in S10, the washing solvent is preferably heated, the washing temperature is more preferably set to 30°C to 150°C, and the washing temperature is still more preferably set to 60°C to 90°C. Since polyesters are highly crystalline, as a dyeing method for the fiber, a dispersion dyeing method in which heat is applied to the fiber, the amorphous intermolecular force of the polyester is weakened, the colorant is caused to flow thereinto, and a dye is dispersed in the fiber using a carrier, by applying pressure, or the like to dye the fiber is often used. Similar to the case of dyeing, upon the removal (bleaching) of the colorant, heat is applied to the fiber, whereby the intermolecular interaction of the polyester is weakened while the polyester is not substantially dissolved, and the polyester-containing fiber can be put into a state where the colorant molecules are likely to be eluted from amorphous regions.

(S20)

(S20) is a step of post-washing the polyester-containing fiber. S20 is the step (A0) of the first method for producing a recycled polyester of the present invention and can be performed by the same method as for the step (A0).

(S30 to S32)

S30 is a step of dissolving a polyester in the polyester-containing fiber in a dissolving solvent, S31 is a step of mixing a liquid containing the polyester dissolved therein and a nonpolar solvent having a dielectric constant of 1 or higher and 3 or lower, and S32 is a step of subjecting the PEs solution into which the nonpolar solvent has been mixed to solid-liquid separation to obtain a liquid component (L) containing the polyester dissolved therein. S30 to S32 are the step (B) of the first method for producing a recycled polyester of the present invention and can be performed by the same method as the corresponding stage of the step (B).

When S30 to S32 are performed, it is possible to remove the impurity ($\beta$), such as a natural fiber, a rayon fiber, an acrylic fiber, a polyethylene fiber, a polypropylene fiber, or a metal compound. Particularly, when S30 to S32 are performed, it is possible to remove titanium oxide. As described above, the polyester-containing fiber often contains a metal oxide, particularly, titanium oxide, kneaded into the fiber. Since this metal oxide has a small particle size, in the case of filtering a liquid obtained by dissolving the polyester in the polyester-containing fiber in a dissolving solvent as it is, there is also a concern that the metal oxide may pass through a filter medium, and be incorporated into the liquid component (L). In the production method of Figure 3, the liquid containing the polyester dissolved therein and the nonpolar solvent having a dielectric constant of 1 or higher and 3 or lower are mixed together and the metal oxide is aggregated in S31, and the solution is then subjected to solid-liquid separation in S32, whereby the incorporation of the metal oxide, particularly, titanium oxide, into the liquid component (L) is further reduced.

(S40)

S40 is a step of mixing the liquid component (L) and a poor solvent (PS) to precipitate the solid polyester and then obtaining the polyester by solid-liquid separation. S40 is the step (C) of the first method for producing a recycled polyester of the present invention and can be performed by the same method as for the step (C).

(S50)

S50 is a step of post-washing the polyester. S50 is the step (C0) of the first method for producing a recycled polyester of the present invention and can be performed by the same method as for the step (C0).

(S60)

S60 is a step of drying the polyester. S60 is the step (D) of the first method for producing a recycled polyester of the present invention and can be performed by the same method as for the step (D).

Particularly, the production method shown in Figure 3 is suitable in a case where the polyester-containing fiber contains a colorant, titanium oxide, and/or a fiber other than polyester. In addition, as described above, since a low-molecular-weight organic compound containing nitrogen (N) is in wide use as a colorant, the production method shown in Figure 3 is more suitable in a case where the polyester-containing fiber contains a low-molecular-weight organic compound containing nitrogen (N), titanium oxide, and/or a fiber other than polyesters. When the production method shown in Figure 3 is used, it is possible to bleach the polyester-containing fiber (remove the colorant) in S10 and to remove titanium oxide and/or a fiber other than polyester in S30 to S32. From the viewpoint of the tone or mechanical strength of a recycled polyester to be obtained, it is preferable to sufficiently reduce the colorant and titanium oxide from the recycled polyester, and as described below, the content of N in the recycled polyester can be used as an index of bleaching, and the content of Ti (titanium) in the recycled polyester can be used as an index of the removal of titanium oxide.

The production method shown in Figure 3 is one example of the method for producing a recycled polyester from a polyester-containing fiber, and the method for producing a recycled polyester from a polyester-containing fiber is not limited thereto.

<Second method for producing recycled polyester>

Hereinafter, the second method for producing a recycled polyester of the present invention will be described.

In the second method for producing a recycled polyester of the present invention, the step (A) of the first method for producing a recycled polyester is not performed; however, instead, it is essential to bring the polyester composite material into contact with an aggregating agent when or after the polyester composite material is dissolved in a specific dissolving solvent.

<Step (B2)>

A step (B2) is a step of mixing a polyester composite material and a dissolving solvent containing a solvent (X2) composed of a phenolic solvent and/or a chlorine-based organic solvent to obtain a PEs solution. The step (B2) is the same as the adjustment of the PEs solution in the step (B) of the first method for producing a recycled polyester of the present invention except that the step (A) is not performed, and a polyester composite material is used, and a preferable aspect thereof is also the same as that of the first production method.

<Step (Z2)>

A step (Z2) is a step of bringing the PEs solution and an aggregating agent into contact with each other, and then performing solid-liquid separation to obtain a liquid component (L2) containing a polyester dissolved therein.

The method for bringing the PEs solution and an aggregating agent into contact with each other, the kind of the aggregating agent, the contact conditions, and the like are the same as what has been described regarding the aggregating agent in the step (B), and a preferable aspect thereof is also the same as that of the aggregating agent in the step (B).

When the step (B2) and the step (Z2) are performed, it is possible to remove a component that is insoluble in the dissolving solvent. The component that is insoluble in the dissolving solvent is a natural fiber such as cotton, hemp, or silk, a rayon fiber, an acrylic fiber, a polyethylene fiber, a polypropylene fiber, an acetate fiber, a glass fiber, a polyethylene resin, a polypropylene resin, a polystyrene resin, a thermosetting polyurethane resin, a polyvinyl chloride resin, an acrylic resin, a metal compound such as titanium oxide or silicon oxide, an inorganic fine particle such as carbon black, or the like. Particularly, when the step (B2) and the step (Z2) are performed, it is possible to effectively separate an inorganic fine particle having a small particle size of a pigment or the like.

In addition, in the second method for producing a recycled polyester, it is preferable to bring the PEs solution and the filter aid into contact with each other before the solid-liquid separation in the step (Z2) is performed. The joint use of the aggregating agent and the filter aid makes it possible to more efficiently remove an impurity. The PEs solution and the filter aid may be brought into contact with each other at the same time as the contact between the PEs solution and the aggregating agent, before the contact between the PEs solution and the aggregating agent, or after the contact between the PEs solution and the aggregating agent. The method for bringing the PEs solution and the filter aid into contact with each other, the kind of the filter aid, the contact conditions, and the like are the same as what has been described regarding the filter aid in the step (B), and a preferable aspect thereof is also the same as that of the filter aid in the step (B).

<Step (C2)>

A step (C2) is a step of mixing the liquid component (L2) and a poor solvent (PS) having a boiling point of 130°C or lower to precipitate the polyester, thereby obtaining a slurry, and then subjecting the slurry to solid-liquid separation to obtain a solid polyester. The step (C2) is the same as the step (C) of the first method for producing a recycled polyester of the present invention except that the liquid component (L2) is used instead of the liquid component (L), and a preferable aspect thereof is also the same as that of the step (C).

An impurity that is soluble in the dissolving solvent of the step (B2) remains in the liquid component (L2). The impurity that can remain in the liquid component (L2) is a low-molecular-weight organic compound (for example, a low-molecular-weight organic compound having a molecular weight of 2000 or lower) containing one or more selected from the group consisting of a colorant, a surfactant, an antistatic agent, an antioxidant, a lightfast agent, and a flame retardant, a nylon fiber, a thermoplastic polyurethane fiber, an acrylic fiber, a nylon resin, a thermoplastic polyurethane resin, an acrylic resin, or the like. These impurities are not precipitated as solid even when the poor solvent (PS) is added thereto and thus can be separated from the polyester and be removed in the step (C2).

In addition, since there is a possibility that an impurity adheres to the surface of the polyester collected by solid-liquid separation in the step (C2), the polyester is preferably further washed (post washing) and dried in a step (D2). The post washing (step (C0)) in the step (C2) can be performed in the same manner as in the post washing in the step (C) of the first method for producing a recycled polyester of the present invention.

<Step (D2)>

The step (D2) is a step of drying the solid polyester to obtain a recycled polyester. The step (D2) is the same as the step (D) of the first method for producing a recycled polyester of the present invention except that the polyester obtained in the step (C2) is used as it is or after being post-washed, and a preferable aspect thereof is also the same as that of the step (D).

<Recycled polyester (recycled PEs)>

A recycled polyester that is obtained by the method for producing a recycled polyester of the present invention is a polyester recycled from a polyester composite material by material recycling. The recycled polyester has the same weight-average molecular weight as a raw material or virgin product, the molecular weight distribution thereof is equal to or less than the molecular weight distribution of the raw material or the virgin product, and the color tone or the mechanical strength is excellent.

The difference between the weight-average molecular weight of the recycled polyester and the weight-average molecular weight of the polyester in the polyester composite material as a raw material is preferably 1000 or less. The weight-average molecular weight of the recycled polyester is 10000 to 12000.

The molecular weight distribution of the recycled polyester is equal to or less than the molecular weight distribution of the raw material or the virgin product and is preferably 1.8 or more and 2.5 or less. As the value of the molecular weight distribution becomes lower, it means that a variation in the molecular weight is smaller, which is preferable in the case of, for example, recycling a fiber or the like using the recycled polyester.

The color tone of the recycled polyester is preferably equal to the color tone of the virgin polyester, and the color difference of the virgin from the polyester that is measured with a color difference meter is preferably 10 or less. The color b value of the recycled polyester that is measured with a color difference meter is preferably 5 or less.

In order to make the color tone of the recycled polyester equal to that of the virgin polyester, the content of an N-containing compound that is in wide use as a colorant is preferably small, for which the N content can be used as an index. The N content in the recycled polyester is preferably 80 ppm or less, more preferably 50 ppm or less, and still more preferably 5 ppm or less. The N content can be measured by a method to be described in Examples.

Therefore, in the method for producing a recycled polyester of the present invention, it is preferable that the N content in the polyester composite is 400 ppm or more, and the N content in the recycled polyester is 80 ppm or less.

From the viewpoint of the mechanical strength of the recycled polyester, the content of a metal compound in the recycled polyester is preferably small. The polyester composite material as the raw material often contains a metal compound as an additive, and when the content of the metal compound is large, there is a tendency that the mechanical strength deteriorates. For example, the content of Ti (titanium) in the recycled polyester is preferably 100 ppm or less and more preferably 50 ppm or less.

Therefore, in the method for producing a recycled polyester of the present invention, it is preferable that the Ti content in the polyester composite is 500 ppm or more, and the Ti content in the recycled polyester is 100 ppm or less.

For the recycled polyester, as will be described below in Examples, it is preferable that a crystallization peak is confirmed between 120°C to 170°C in DSC measurement. In addition, the amount of heat generated of the crystallization peak between 120°C to 170°C is preferably 50% or more and more preferably 80% or more of the heat of fusion of the virgin polyester.

<Method for producing polyester composite material>

In addition, the present invention relates to a method for producing a polyester composite material, the method having a step of producing a recycled polyester by the method for producing a recycled polyester of the present invention and a step of producing a polyester composite material using the obtained recycled polyester (hereinafter referred to as "the method for producing a polyester composite material of the present invention" in some cases).

The step of producing a recycled polyester is as described above. The step of producing a polyester composite material can be performed by a known production method except that the recycled polyester is used as a raw material polyester. Examples of a method for producing the polyester composite material include a method in which the recycled polyester is spined using a spinneret and thereby processed into a polyester fiber product, a method in which the recycled polyester is molded into a variety of polyester products, such as a polyester film and a polyester molded product, by injection molding or the like using melt extrusion or a mold, and the like.

In addition, in the step of producing a polyester composite material, as the raw material polyester, the recycled polyester may be contained, only the recycled polyester may be used, or the recycled polyester and a virgin polyester may be used in combination.

The form of the polyester composite material to be produced is not particularly limited, and it is possible to produce a polyester-containing fiber, a polyester-containing molded product, a polyester-containing laminated product, or the like by the method for producing a polyester composite material of the present invention.

Examples

Hereinafter, the present invention will be more specifically described with Examples, but the present invention is not limited to Examples below unless the gist of the present invention is changed.

<Analysis methods>

= Measurement of molecular weight =

A measurement sample was dissolved in 1,1,1,3,3,3-hexafluoro-2-propanol (HFIP), filtered with a 0.45 $\mu$m syringe filter, and then measured under the following conditions by size exclusion chromatography.

· Device: "ACQUITY" manufactured by Waters Corporation
· Mobile phase: 0.01 M sodium trifluoroacetate-added HFIP
· Flow rate: 0.2 mL/min
· Columns: ACQUITY APC XT900 + XT450 + XT125

· Column temperature: 50°C
· Injection amount: 10 μL
· Detector: Differential refractometer
· Molecular weight calculation: Polymethyl methacrylate (PMMA) conversion

= Analysis of N contained in sample before and after recycling =

Whether or not a sample had been bleached was determined by analyzing the N amount. A recycled polyester was combusted under an argon and oxygen atmosphere, and the generated combustion gas was measured with a trace nitrogen analyzer ("TN-2100H" manufactured by Nittoseiko Analytech Co., Ltd.) for which a reduced pressure chemiluminescence method is used. At that time, a sample containing aniline dissolved in toluene was used as a standard specimen.

= Measurement of color tone of recycled polyester =

The L value, a value, and b value of the recycled polyester were measured using a color difference meter ("ZE-6000" manufactured by Nippon Denshoku Industries Co., Ltd.). In addition, a virgin polyester ("GG500D" manufactured by Mitsubishi Gas Chemical Engineering-Plastics Co., Ltd.) was also measured. $L_1$, $a_1$, and $b_1$ represent the L value, a value, and b value of the recycled polyester, respectively, $L_0$, $a_0$, and $b_0$ represent the L value, a value, and b value of the virgin polyester, respectively, and a color difference ΔEa*b* was calculated using the following formula.

[Formula 1]

$$\Delta E\ a^*\ b^* = \sqrt{(L_1 - L_0)^2 + (a_1 - a_0)^2 + (b_1 - b_0)^2}$$

= Analysis of Ti contained in sample before and after recycling =

Sulfuric acid was added the recycled polyester, a white smoke treatment was performed thereon on a hot plate, and the recycled polyester was dry-ashed at 650°C with an electric furnace ("Muffle Furnace FP410" manufactured by Yamato Co., Ltd.). Pure water and sulfuric acid were added to the remaining ash, a white smoke treatment was performed thereon to dissolve the ash, and the volume was made constant with pure water. After that, the amount of Ti contained in the recycled polyester was determined with an ICP spectrometer ("5800 ICP-OES" manufactured by Agilent Technologies Japan, Ltd.).

= Molding test =

Three grams of the recycled polyester was melted at 290 degrees and molded by hot pressing to be 7 cm in length, 7 cm in width, and 0.5 mm in thickness. Since some samples were as brittle as being cracked immediately after the molding, and the molded products were evaluated as described below.

⊙: The sample maintained the strength and did not crack throughout 10 times of molding.
O: The sample maintained the strength and did not crack seven times or more and nine times or less out of 10 times of molding.
△: The sample maintained the strength and did not crack three times or more and six times or less out of 10 times of molding.
×: The sample maintained the strength and did not crack two times or less out of 10 times of molding.

= Measurement of degree of crystallization =

In order to confirm the thermal history during the molding of the sample obtained by the above-described molding test, the degree of crystallization was measured. The measurement of the degree of crystallization was measured by DSC ("EXSTAR6000" manufactured by Hitachi High-Tech Analytical Science). Eight grams of the molded product molded using the recycled polyester was weighed and heated from 30°C up to 360°C at 10 °C/minute.
Polyesters have a characteristic of a slow crystallization rate, which makes it possible to obtain a molded product having excellent transparency and mechanical strength. Therefore, when DSC measurement is performed on a large number of molded products, crystallization peaks are confirmed between 120°C to 170°C. However, when there is an impurity in a molded product, the impurity serves as a nucleating agent and thus accelerates the crystallization rate. As a result, the degree of crystallization of the molded product increases, and the mechanical strength deteriorates. When DSC measurement is performed on such a molded product, no crystallization peaks are confirmed between 120°C to 170°C. Therefore, in the present invention, measurement was performed to confirm the crystallization rate of a molded body of the recycled polyester obtained by the above-described molding test. A virgin molded body was measured 10 times, and the average value of the heats of fusion at 260°C was obtained and compared with the amount of heat generated of the crystallization peak of each of the molded bodies of the recycled polyesters obtained in the above-described molding test, thereby performing evaluation as described below.

⊙: A crystallization peak was confirmed between 120°C to 170°C, and the amount of heat generated thereof was 80% to 100% of the heat of fusion of the virgin product.
O: A crystallization peak was confirmed between 120°C to 170°C, and the amount of heat generated thereof was 50% to 80% of the heat of fusion of the virgin product.
△: A crystallization peak was confirmed between 120°C to 170°C, and the amount of heat generated thereof was 50% or less of the heat of fusion of the virgin product.
×: No crystallization peaks were confirmed between 120°C to 170°C.

= Measurement of melting point of raw material =

In order to confirm the kind of the polyester in the polyester composite material as the raw material, the melting point was measured by DSC ("EXSTAR6000" manufactured by Hitachi High-Tech Analytical Science), and the kind of the polyester was specified. In the case of polyethylene terephthalate (PET), a melting peak was shown near 260°C, and in the case of polybutylene terephthalate, a melting peak was shown near 220°C, and it was thus possible to confirm the kinds of the polyesters.

<Raw materials>

The following raw material A to raw material E were used.

Raw material A: Polyester clothes 100% product (1)
Raw material B: Polyester clothes 100% product (2)
Raw material C: Polyester clothes 100% product (3)
Raw material D: Polyester and cotton-mixed clothes (1)
Raw material E: Polyester and cotton-mixed clothes (2)
Raw material F: Automotive interior fiber
Raw material G: Polybutylene terephthalate resin containing 30% of glass fiber (GF) (containing carbon black (CB))

The raw material was shredded with a shredder into a size of 2 cm × 2 cm in advance. In addition, Table 1 shows the polyester content rates in the raw materials A to G, the kinds, colors, weight-average molecular weights Mw, number-average molecular weights Mn, Mw/Mn's, N content rates, and Ti content rates of the polyesters.

[Table 1]

| Raw material | Kind | Polyester content rate [%] | Kind of polyester | Color | Mw [-] | Mn [-] | Mw/Mn [-] | N content rate [ppm] | Ti content rate [ppm] |
|---|---|---|---|---|---|---|---|---|---|
| A | Polyester clothes (1) | 100 | PET | Dark blue | 10300 | 1330 | 7.74 | 470 | 1900 |
| B | Polyester clothes (2) | 100 | PET | Black | 10800 | 1220 | 8.85 | 670 | 1700 |
| C | Polyester clothes (3) | 100 | PET | Green | 10700 | 1080 | 9.91 | 820 | 1300 |
| D | Polyester + cotton clothes (1) | 65 | PET | Red | - | - | - | 940 | 1100 |

(continued)

| Raw material | Kind | Polyester content rate [%] | Kind of polyester | Color | Mw [-] | Mn [-] | Mw/Mn [-] | N content rate [ppm] | Ti content rate [ppm] |
|---|---|---|---|---|---|---|---|---|---|
| E | Polyester + cotton clothes (2) | 35 | PET | Yellow | - | - | - | 520 | 650 |
| F | Automotive interior fiber | 100 | PET | Black | - | - | - | 25 | 1300 |
| G | Glass fiber-containing PBT resin | 70 | PBT | Black | - | - | - | - | 630 |

[Example 1]

(Step A)

300 g of the shredded sample A was put into a 5 L separable flask, 3000 g of a solution obtained by adjusting toluene and phenol to a mass ratio of 50:50 was added thereto as a washing solvent, and the mixture was heated at 80°C for one hour while being stirred under a nitrogen atmosphere, thereby performing the bleaching of the fiber and the removal of other impurities. After that, the solution was removed by filtration, and a bleached sample A was obtained.

(Step (A0))

An operation of adding 2000 g of toluene heated to 80°C thereto, stirring the mixture, and removing toluene was performed twice, and a colorant or the like adhering to the fiber was washed and removed.

(Step (B))

Next, 3000 g of phenol was added thereto as a dissolving solvent, the mixture was heated while being stirred at 110°C for one hour under a nitrogen atmosphere to dissolve the polyester fiber. This was filtered using filter paper having a pore diameter of 0.5 $\mu$m, thereby removing an impurity and obtaining a filtrate containing the polyester fiber dissolved therein.

(Step (C))

While the temperature of the filtrate was held at 50°C, 3000 g of acetone was added dropwise to the filtrate little by little as a poor solvent (PS) to prevent the temperature from exceeding the control temperature of 50°C, and PET was precipitated. After the full amount of acetone was added thereto, the temperature was decreased to 20°C over 30 minutes, and the filtrate was stirred at 20°C for one hour. This was filtered using filter paper having a pore diameter of 7 $\mu$m, and a residue (PET) was collected.

(Step (C0))

An operation of washing the residue (PET) by adding 2000 g of acetone thereto and performing filtration again was performed three times to remove an impurity, and a wet cake (washed PET) was obtained.

(Step (D))

The obtained wet cake was dried under reduced pressure at 80°C using an evaporator, and a recycled polyester was obtained.
On the obtained recycled polyester, each evaluation was performed by the above-described procedure. Table 2 shows the experimental conditions, and Table 4 shows each evaluation result. The collection rate of the polyester was calculated as the collection rate relative to the polyester contained in the raw material.

[Example 2]

A recycled polyester was obtained by the same method as in Example 1 except that 300 g of the shredded sample B was added to the 5 L separable flask instead of the shredded sample A, and each evaluation was performed. Table 2 shows the experimental conditions, and Table 4 shows each evaluation result.

[Example 3]

A recycled polyester was obtained by the same method as in Example 1 except that 300 g of the shredded sample C was added to the 5 L separable flask instead of the shredded sample A, and each evaluation was performed. Table 2 shows the experimental conditions, and Table 4 shows each evaluation result.

[Example 4]

A recycled polyester was obtained by the same method as in Example 1 except that 300 g of the shredded sample D was added to the 5 L separable flask instead of the shredded sample A, and each evaluation was performed. Table 2 shows the experimental conditions, and Table 4 shows each evaluation result.

[Example 5]

A recycled polyester was obtained by the same method as in Example 1 except that 300 g of the shredded sample E was added to the 5 L separable flask instead of the shredded sample A, and each evaluation was performed. Table 2 shows the experimental conditions, and Table 4 shows each evaluation result.

[Example 6]

(Step (A))

300 g of the shredded sample A was put into a 5 L separable flask, 3000 g of a solution obtained by adjusting toluene and methylene chloride to a mass ratio of 50:50 was added thereto as a washing solvent, and the mixture was heated at 40°C for one hour while being stirred under a nitrogen atmosphere, thereby performing the bleaching of the fiber and the removal of other impurities. After that, the solution was removed by filtration, and a bleached sample A was obtained.

(Step (A0))

An operation of adding 2000 g of toluene of room temperature thereto, stirring the mixture, and removing toluene was performed twice, and a colorant or the like adhering to the fiber was washed and removed.

(Step (B))

Next, 600 g of phenol and 2400 g of methylene chloride were added thereto as a dissolving solvent, the mixture was heated while being stirred at 45°C for one hour under a nitrogen atmosphere to dissolve the polyester fiber. This was filtered using filter paper having a pore diameter of 0.5 $\mu$m, thereby removing an impurity and obtaining a filtrate containing the polyester fiber dissolved therein.

(Step (C))

While the temperature of the filtrate was held at 40°C, 3000 g of acetone was added dropwise to the filtrate little by little as a poor solvent (PS) to prevent the temperature from exceeding the control temperature of 40°C, and PET was precipitated. After the full amount of acetone was added thereto, the temperature was decreased to 20°C over 30 minutes, and the filtrate was stirred at 20°C for one hour. This was filtered using filter paper having a pore diameter of 7 $\mu$m, and a residue (PET) was collected.

(Step (C0))

An operation of washing the residue (PET) by adding 2000 g of acetone thereto and performing filtration again was performed three times to remove an impurity, and a wet cake (washed PET) was obtained.

(Step (D))

The obtained wet cake was dried under reduced pressure at 80°C using an evaporator, and a recycled polyester was obtained.

On the obtained recycled polyester, each evaluation was performed by the above-described procedure. Table 2 shows the experimental conditions, and Table 4 shows each evaluation result. The collection rate of the polyester was calculated as the collection rate relative to the polyester contained in the raw material.

[Example 7]

A recycled polyester was obtained by the same method as in Example 1 except that "3000 g of phenol was added thereto as a dissolving solvent, the mixture was heated at 110°C for one hour to dissolve the polyester fiber, 4500 g of toluene was then added thereto, the mixture was stirred for 30 minutes, and filtration was then performed using filter paper having a pore diameter of 0.5 $\mu$m, thereby obtaining a filtrate" as the step (B), and each evaluation was performed. Table 2 shows the experimental conditions, and Table 4 shows each evaluation result.

[Example 8]

A recycled polyester was obtained by the same method as in Example 7 except that 300 g of the shredded sample B was added to the 5 L separable flask instead of the shredded sample A, and each evaluation was performed. Table 2 shows the experimental conditions, and Table 4 shows each evaluation result.

[Example 9]

A recycled polyester was obtained by the same method as in Example 7 except that 300 g of the shredded sample C was added to the 5 L separable flask instead of the shredded sample A, and each evaluation was performed.

Table 2 shows the experimental conditions, and Table 4 shows each evaluation result.

[Example 10]

A recycled polyester was obtained by the same method as in Example 7 except that 300 g of the shredded sample D was added to the 5 L separable flask instead of the shredded sample A, and each evaluation was performed. Table 2 shows the experimental conditions, and Table 4 shows each evaluation result.

[Example 11]

A recycled polyester was obtained by the same method as in Example 7 except that 300 g of the shredded sample E was added to the 5 L separable flask instead of the shredded sample A, and each evaluation was performed. Table 2 shows the experimental conditions, and Table 4 shows each evaluation result.

[Example 12]

A recycled polyester was obtained by the same method as in Example 7 except that PET was precipitated with water, and each evaluation was performed. Table 2 shows the experimental conditions, and Table 4 shows each evaluation result.

[Example 13]

(Step A)

100 g of the shredded sample D was put into a 5 L separable flask, 1000 g of a solution obtained by adjusting toluene and phenol to a mass ratio of 50:50 was added thereto as a washing solvent, and the mixture was heated at 80°C for one hour while being stirred under a nitrogen atmosphere, thereby performing the bleaching of the fiber and the removal of other impurities. After that, the solution was removed by filtration, and a bleached sample A was obtained.

(Step (A0))

An operation of adding 700 g of toluene of room temperature thereto, stirring the mixture, and removing toluene was performed twice, and a colorant or the like adhering to the fiber was washed and removed.

(Step (B))

Next, 1000 g of phenol was added thereto as a dissolving solvent, the mixture was heated while being stirred at 110°C for one hour under a nitrogen atmosphere to dissolve the polyester fiber. After the dissolution, 10 g of activated carbon was added thereto, the mixture was stirred for 60 minutes, and this was filtered using filter paper having a pore diameter of 0.5 $\mu$m, thereby removing an impurity and obtaining a filtrate containing the polyester fiber dissolved therein.

(Step (C))

While the temperature of the filtrate was held at 40°C, 1000 g of acetone was added dropwise to the filtrate little by little as a poor solvent (PS) to prevent the temperature from exceeding the control temperature of 40°C, and PET was precipitated. After the full amount of acetone was added thereto, the temperature was decreased to 20°C over 30 minutes, and the filtrate was stirred at 20°C for one hour. This was filtered using filter paper having a pore diameter of 7 $\mu$m, and a residue (PET) was collected.

(Step (C0))

An operation of washing the residue (PET) by adding 700 g of acetone thereto and performing filtration again was performed three times to remove an impurity, and a wet cake (washed PET) was obtained.

(Step (D))

The wet cake obtained was dried under reduced pressure at 80°C using an evaporator, and a recycled polyester was obtained.
On the obtained recycled polyester, each evaluation was performed by the above-described procedure. Table 2 shows the experimental conditions, and Table 4 shows each evaluation result. The collection rate of the polyester was calculated as the collection rate relative to the polyester contained in the raw material.

[Example 14]

A recycled polyester was obtained by the same method as in Example 13 except that in the step (B), after the dissolution of the polyester fiber, 5 g of activated carbon and 3 g of iron(II) sulfate were added instead of 10 g of activated carbon, and each evaluation was performed. Table 3 shows the experimental conditions, and Table 5 shows each evaluation result.

[Example 15]

A recycled polyester was obtained by the same method as in Example 7 except that 300 g of the shredded sample F was added to the 5 L separable flask instead of the shredded sample A, and each evaluation was performed. Table 3 shows the experimental conditions, and Table 5 shows each evaluation result.

[Example 16]

A recycled polyester was obtained by the same method as in Example 1 except that 300 g of the shredded sample F was added to the 5 L separable flask instead of the shredded sample A, "3000 g of phenol was added thereto as a dissolving solvent, the mixture was heated at 110°C for one hour to dissolve the polyester fiber, 30 g of activated carbon and 10 g of iron(II) sulfate were then added thereto, the mixture was stirred at 80°C for 60 minutes, and filtration was then performed using filter paper having a pore diameter of 0.5 $\mu$m, thereby obtaining a filtrate" as the step (B), and each evaluation was performed. Table 3 shows the experimental conditions, and Table 5 shows each evaluation result.

[Example 17]

A recycled polyester was obtained by the same method as in Example 7 except that 300 g of the shredded sample F was added to the 5 L separable flask instead of the shredded sample A, "3000 g of phenol was added thereto as a dissolving solvent, the mixture was heated at 110°C for one hour to dissolve the polyester fiber, 4500 g of toluene was then added thereto, the mixture was stirred for 30 minutes, 30 g of iron(III) chloride was then added thereto, the mixture was stirred at 80°C for 60 minutes, and filtration was then performed using filter paper having a pore diameter of 0.5 $\mu$m, thereby obtaining a filtrate" as the step (B), and each evaluation was performed. Table 3 shows the experimental conditions, and Table 5 shows each evaluation result.

[Example 18]

A recycled polyester (PBT) was obtained by the same method as in Example 1 except that 300 g of the shredded sample G was added to the 5 L separable flask instead of the shredded sample A, and each evaluation was performed. Table 3 shows the experimental conditions, and Table 5 shows each evaluation result.

[Example 19]

A recycled polyester (PBT) was obtained by the same method as in Example 1 except that 300 g of the shredded sample G was added to the 5 L separable flask instead of the shredded sample A, "3000 g of phenol was added thereto as a dissolving solvent, the mixture was heated at 90°C for one hour to dissolve the polyester fiber, 15 g of iron(III) chloride was then added thereto, the mixture was stirred at 80°C for 60 minutes, and filtration was then performed using filter paper having a pore diameter of 0.5 $\mu$m, thereby obtaining a filtrate" as the step (B), and each evaluation was performed. Table 3 shows the experimental conditions, and Table 5 shows each evaluation result.

[Example 20]

A recycled polyester (PBT) was obtained by the same method as in Example 1 except that 300 g of the shredded sample G was added to the 5 L separable flask instead of the shredded sample A, "3000 g of phenol was added thereto as a dissolving solvent, the mixture was heated at 100°C for one hour to dissolve the polyester fiber, 30 g of activated white clay and 15 g of iron(III) sulfate were then added thereto, the mixture was stirred at 80°C for 60 minutes, and filtration was then performed using filter paper having a pore diameter of 0.5 $\mu$m, thereby obtaining a filtrate" as the step (B), and each evaluation was performed. Table 3 shows the experimental conditions, and Table 5 shows each evaluation result.

[Example 21]

The same method as in Example 16 was performed except that the step (A) and the step (A0) were not performed, whereby the step (B2), the step (Z2), the step (C2), the step (C0), and the step (D2) were performed, and a recycled polyester was obtained. Each evaluation of the obtained recycled polyester was performed. Table 3 shows the experimental conditions, and Table 5 shows each evaluation result.

[Example 22]

The same method as in Example 1 was performed except that 300 g of the shredded sample G was added to the 5 L separable flask instead of the shredded sample A, the step (A) and the step (A0) were not performed, and "3000 g of phenol was added thereto as a dissolving solvent, the mixture was heated at 80°C for one hour to dissolve the polyester fiber, 15 g of activated carbon and 15 g of iron(II) sulfate were then added thereto, the mixture was stirred at 60°C for 60 minutes, and filtration was then performed using filter paper having a pore diameter of 0.5 $\mu$m, thereby obtaining a filtrate" as the step (B), whereby the step (B2), the step (Z2), the step (C2), the step (C0), and the step (D2) were performed, and a recycled polyester (PBT) was obtained. Each evaluation of the obtained recycled polyester was performed. Table 3 shows the experimental conditions, and Table 5 shows each evaluation result.

[Comparative Example 1]

10 g of the shredded sample A was added to a 500 mL eggplant flask, the bleaching operation (step (A)) was not performed, 100 g of hexafluoroisopropanol (HFIP) was added thereto, and the polyester fiber was dissolved at room temperature for one hour. This was filtered using filter paper having a pore diameter of 0.5 $\mu$m to remove an impurity, and a filtrate was obtained (corresponding to the step (B)). The filtrate was added dropwise to 100 g of water little by little, and PET was precipitated. Filtration was performed using filter paper having a pore diameter of 7 $\mu$m, and a residue (PET) was collected (corresponding to the step (C)). An operation of washing the residue by adding 70 g of water thereto and performing filtration again was performed three times to remove an impurity, and a wet cake (washed PET) was obtained (corresponding to the step (C0)). The obtained wet cake was dried, and a recycled polyester was obtained (corresponding to the step (D)). On the obtained recycled polyester, each evaluation was performed by the above-described procedure. Table 3 shows the experimental conditions, and Table 5 shows each evaluation result.

[Comparative Example 2]

50 g of the shredded sample A was put into a 1 L separable flask, 500 g of 1,3-dimethyl-2-imidazolidinone (DMI) was added thereto, and the mixture was heated at 120°C for one hour under a nitrogen atmosphere, thereby bleaching the fiber. After that, the solution was removed, and a bleached sample A was obtained (corresponding to the step (A)). An operation of adding 350 g of 1,3-dimethyl-2-imidazolidinone heated to 120°C thereto and stirring the mixture was performed twice to wash and remove a coloring component adhering to the fiber (corresponding to the step (A0)). Next, 500 g of 1,3-dimethyl-2-imidazolidinone was added thereto, and the mixture was heated at 170°C for one hour to dissolve the polyester fiber. This was filtered using filter paper having a pore diameter of 0.5 μm to remove an impurity, and a filtrate was obtained (corresponding to the step (B)). The filtrate was added dropwise to 500 g of ethanol little by little, and PET was precipitated. Filtration was performed using filter paper having a pore diameter of 7 μm, and a residue (PET) was collected (corresponding to the step (C)). An operation of washing the residue by adding 350 g of ethanol thereto and performing filtration again was performed three times to remove an impurity, and a wet cake (washed PET) was obtained (corresponding to the step (C0)). The obtained wet cake was dried under reduced pressure at 80°C for three hours, but the wet cake was not dried. Therefore, the temperature was raised to 120°C, the wet cake was further dried under reduced pressure of 3 kPa for three hours, but the solvent remained on the wall surface of the flask, and it was not possible to sufficiently remove the solvent from the recycled polyester (corresponding to the step (D)). Recycled polyesters were collected in a state of containing solvent, and were evaluated in accordance with the above-described procedure. Table 3 shows the experimental conditions, and Table 5 shows each evaluation result. From the evaluation results shown in Table 5, it is found that since DMI is a solvent containing N, the N content rate was large compared with that before the treatment, and DMI could not be sufficiently removed.

[Comparative Example 3]

300 g of the shredded sample A was put into a 5 L separable flask, the bleaching operation (step (A)) was not performed, 3000 g of phenol was added thereto, and the mixture was heated at 110°C for one hour to dissolve the polyester fiber. This was filtered using filter paper having a pore diameter of 0.5 μm to remove an impurity, and a filtrate was obtained (corresponding to the step (B)). The filtrate was collected, while the temperature of the filtrate was held at 50°C, 3000 g of acetone was added dropwise to the filtrate little by little to prevent the temperature from exceeding the control temperature of 50°C, and PET was precipitated. After the full amount of acetone was added thereto, the temperature was decreased to 20°C over 30 minutes, and the filtrate was then stirred at 20°C. Filtration was performed using filter paper having a pore diameter of 7 μm, and a residue (PET) was collected (corresponding to the step (C)). An operation of washing the residue by adding 2000 g of acetone thereto and performing filtration again was performed three times to remove an impurity, and a wet cake (washed PET) was obtained (corresponding to the step (C0)). The obtained wet cake was dried under reduced pressure at 80°C using an evaporator, and a recycled polyester was obtained (corresponding to the step (D)). On the obtained recycled polyester, each evaluation was performed by the above-described procedure. Table 3 shows the experimental conditions, and Table 5 shows each evaluation result.

[Comparative Example 4]

300 g of the shredded sample G was put into a 5 L separable flask, the bleaching operation (step (A)) was not performed, 3000 g of phenol was added thereto, and the mixture was heated at 110°C for one hour. This was filtered using filter paper having a pore diameter of 0.5 μm to remove an impurity, and a filtrate was obtained (corresponding to the step (B)). The filtrate was collected, while the temperature of the filtrate was held at 50°C, 3000 g of acetone was added dropwise to the filtrate little by little to prevent the temperature from exceeding the control temperature of 50°C, and PET was precipitated. After the full amount of acetone was added thereto, the temperature was decreased to 20°C over 30 minutes, and the filtrate was then stirred at 20°C for one hour. Filtration was performed using filter paper having a pore diameter of 7 μm, and a residue (PET) was collected (corresponding to the step (C)). An operation of washing the residue by adding 2000 g of acetone thereto and performing filtration again was performed three times to remove an impurity, and a wet cake (washed PET) was obtained (corresponding to the step (C0)). The obtained wet cake was dried under reduced pressure at 80°C using an evaporator, and a recycled polyester was obtained (corresponding to the step (D)). On the obtained recycled polyester, each evaluation was performed by the above-described procedure. Table 3 shows the experimental conditions, and Table 5 shows each evaluation result.

Table 4 shows the evaluation results of each of Example 1 to Example 13, and Table 5 shows the evaluation results of each of Example 15 to Example 22 and Comparative Example 1 to Comparative Example 4. For items not evaluated, N.T. was marked. From the results of Examples 1 to 20 and Comparative Examples 1 to 4, it can be read that when a process of the step (A) (washing with washing solvent), step (B) (polyester dissolution and filtration), and the step (C) (reprecipitation of polyester) is performed, a recycled polyester having a molecular weight distribution of approximately 1.85 to 2.1 and an excellent color tone can be obtained without chemically decomposing the polyester. Particularly, it is found that when a titanium oxide aggregation operation is performed in the step (B), a recycled polyester having an excellent color tone and mechanical strength can be obtained. In addition, from the results of Examples 21 and 22 and Comparative Examples 1 to 4, when an aggregating agent and/or a filter aid is used (the step (Z2) is performed), a recycled polyester having an excellent color tone and mechanical strength can be obtained even without performing the step (A).

[Table 2]

| | Kind of raw material | Polyester content rate [%] | Bleaching in Step (A) | | Step (B) or Step (B2) | | Step (B) or Ste (Z2) | | Step (C) or Step (C2) |
|---|---|---|---|---|---|---|---|---|---|
| | | | Presence or absence of Step (A) | Washing solvent | Dissolving solvent | Mixing of nonpolar solvent (titanium oxide aggregation operation) | Addition of filter aid | Addition of aggregating agent | Poor solvent |
| Example 1 | A | 100 | Present | Phenol/toluene | Phenol | Absent | Absent | Absent | Acetone |
| Example 2 | B | 100 | Present | Phenol/toluene | Phenol | Absent | Absent | Absent | Acetone |
| Example 3 | C | 100 | Present | Phenol/toluene | Phenol | Absent | Absent | Absent | Acetone |
| Example 4 | D | 65 | Present | Phenol/toluene | Phenol | Absent | Absent | Absent | Acetone |
| Example 5 | E | 35 | Present | Phenol/toluene | Phenol | Absent | Absent | Absent | Acetone |
| Example 6 | A | 100 | Present | Methylene chloride/toluene | Methylene chloride/phenol | Absent | Absent | Absent | Acetone |
| Example 7 | A | 100 | Present | Phenol/toluene | Phenol | Present | Absent | Absent | Acetone |
| Example 8 | B | 100 | Present | Phenol/toluene | Phenol | Present | Absent | Absent | Acetone |
| Example 9 | C | 100 | Present | Phenol/toluene | Phenol | Present | Absent | Absent | Acetone |
| Example 10 | D | 65 | Present | Phenol/toluene | Phenol | Present | Absent | Absent | Acetone |
| Example 11 | E | 35 | Present | Phenol/toluene | Phenol | Present | Absent | Absent | Acetone |
| Example 12 | A | 100 | Present | Phenol/toluene | Phenol | Present | Absent | Absent | Water |
| Example 13 | D | 65 | Present | Phenol/toluene | Phenol | Absent | Present | Absent | Acetone |

[Table 3]

| | Kind of raw material | Polyester content rate [%] | Bleaching in Step (A) | | Step (B) or Step (B2) | | Step (B) or Step (Z2) | | Step (C) or Step (C2) |
| --- | --- | --- | --- | --- | --- | --- | --- | --- | --- |
| | | | Presence or absence of Step (A) | Washing solvent | Dissolving solvent | Mixing of nonpolar solvent (titanium oxide aggregation operation) | Addition of filter aid | Addition of aggregating agent | Poor solvent |
| Example 14 | D | 65 | Present | Phenol/toluene | Phenol | Absent | Present | Present | Acetone |
| Example 15 | F | 100 | Present | Phenol/toluene | Phenol | Present | Absent | Absent | Acetone |
| Example 16 | F | 100 | Present | Phenol/toluene | Phenol | Absent | Present | Present | Acetone |
| Example 17 | F | 100 | Present | Phenol/toluene | Phenol | Present | Absent | Present | Acetone |
| Example 18 | G | 70 | Present | Phenol/toluene | Phenol | Absent | Absent | Absent | Acetone |
| Example 19 | G | 70 | Present | Phenol/toluene | Phenol | Absent | Absent | Present | Acetone |
| Example 20 | G | 70 | Present | Phenol/toluene | Phenol | Absent | Present | Present | Acetone |
| Example 21 | F | 100 | Absent | - | Phenol | Absent | Present | Present | Acetone |
| Example 22 | G | 70 | Absent | - | Phenol | Absent | Present | Present | Acetone |
| Comparative Example 1 | A | 100 | Absent | - | HFIP | Absent | Absent | Absent | Water |
| Comparative Example 2 | A | 100 | Present | DMI | DMI | Absent | Absent | Absent | Ethanol |
| Comparative Example 3 | A | 100 | Absent | - | Phenol | Absent | Absent | Absent | Acetone |
| Comparative Example 4 | G | 100 | Absent | - | Phenol | Absent | Absent | Absent | Acetone |

[Table 4]

| | Polyester collection rate [%] | Mw [-] | Mn [-] | Mw/Mn [-] | N content rate [ppm] | Color Tone (color b value) | Color difference (ΔE*ab) | Ti content rate [ppm] | Moldability | Degree of crystallization |
|---|---|---|---|---|---|---|---|---|---|---|
| Example 1 | 91 | 10200 | 5310 | 1.9 | 40 | 3.7 | 7.5 | 1000 | Δ | × |
| Example 2 | 86 | 10600 | 5640 | 1.9 | 36 | 4.2 | 8.9 | 660 | N.T. | N.T. |
| Example 3 | 88 | 11100 | 6070 | 1.8 | 10 | 2.2 | 2.5 | 430 | ○ | × |
| Example 4 | 82 | 10400 | 5580 | 1.9 | 52 | 4.3 | 9.3 | N.T. | N.T. | N.T. |
| Example 5 | 79 | 10100 | 5250 | 1.9 | 31 | 3.3 | 7.9 | N.T. | N.T. | N.T. |
| Example 6 | 75 | 10900 | 5820 | 1.9 | 55 | 4.5 | 9.7 | N.T. | N.T. | N.T. |
| Example 7 | 90 | 10300 | 5280 | 2.0 | 12 | 1.9 | 2.1 | 88 | ⊙ | ⊙ |
| Example 8 | 88 | 10800 | 5670 | 1.9 | 15 | 2.1 | 3.3 | 92 | ○ | ○ |
| Example 9 | 85 | 10600 | 5920 | 1.8 | <10 | 1.2 | 1.9 | 60 | ⊙ | ⊙ |
| Example 10 | 83 | 10300 | 5430 | 1.9 | 13 | 2.0 | 4.3 | 75 | ○ | ○ |
| Example 11 | 80 | 10500 | 5280 | 2.0 | 12 | 1.8 | 3.6 | 64 | ⊙ | ⊙ |
| Example 12 | 84 | 10400 | 4980 | 2.1 | 10 | 1.7 | 1.8 | 102 | ○ | ○ |
| Example 13 | 80 | 10300 | 5120 | 2.0 | <10 | 0.8 | 1.3 | N.T. | ⊙ | ⊙ |

[Table 5]

| | Polyester collection rate [%] | Mw [-] | Mn [-] | Mw/Mn [-] | N content rate [ppm] | Color Tone (color b value) | Color difference ($\Delta E^*ab$) | Ti content rate [ppm] | Moldability | Degree of crystallization |
|---|---|---|---|---|---|---|---|---|---|---|
| Example 14 | 83 | 11200 | 5720 | 2.0 | <10 | 0.8 | 1.2 | 22 | ⊙ | ⊙ |
| Example 15 | 85 | N.T. | N.T. | N.T. | N.T. | -0.9 | 74.2 | 110 | N.T. | N.T. |
| Example 16 | 87 | N.T. | N.T. | N.T. | N.T. | 0.9 | 3.5 | 57 | ○ | ○ |
| Example 17 | 83 | N.T. | N.T. | N.T. | N.T. | 1.7 | 3.5 | N.T. | ○ | ○ |
| Example 18 | 73 | N.T. | N.T. | N.T. | N.T. | -0.5 | 40.2 | N.T. | N.T. | ○ |
| Example 19 | 70 | N.T. | N.T. | N.T. | N.T. | 1.1 | 8.3 | N.T. | ○ | N.T |
| Example 20 | 72 | N.T. | N.T. | N.T. | N.T. | 0.8 | 3.4 | N.T. | ○ | ○ |
| Example 21 | 81 | N.T. | N.T. | N.T. | N.T. | 1.0 | 2.9 | 72 | N.T. | N.T. |
| Example 22 | 88 | N.T. | N.T. | N.T. | N.T. | 1.2 | 9.1 | N.T. | ⊙ | ⊙ |
| Comparative Example 1 | 70 | 10200 | 5230 | 2.0 | 220 | 6.9 | 18.9 | 1300 | × | × |
| Comparative Example 2 | 65 | 10000 | 3420 | 2.9 | 180 | 5.7 | 13.9 | 1300 | × | × |
| Comparative Example 3 | 85 | 10400 | 4850 | 2.1 | 200 | 5.4 | 17.2 | 1200 | × | × |
| Comparative Example 4 | 88 | N.T. | N.T. | N.T. | N.T. | 0.9 | 51.8 | N.T. | × | × |

**Claims**

1. A method for producing a recycled polyester from a polyester composite material, the method comprising the following step (A) to step (D):

   step (A): a step of washing a polyester composite material using a washing solvent obtained by mixing a solvent (X1) composed of a phenolic solvent and/or a chlorine-based organic solvent and one or more solvents (Y1) selected from the group consisting of an aromatic hydrocarbon-based solvent, an aliphatic hydrocarbon-based solvent, a ketone-based solvent, an aldehyde-based solvent, an alcohol-based solvent, an ether-based solvent, and water;
   step (B): a step of mixing the washed polyester composite material and a dissolving solvent containing a solvent (X2) composed of a phenolic solvent and/or a chlorine-based organic solvent to obtain a solution containing a polyester in the polyester composite material dissolved therein, and then subjecting the solution containing the polyester dissolved therein to solid-liquid separation to obtain a liquid component (L) containing the polyester dissolved therein;
   step (C): a step of mixing the liquid component (L) and a poor solvent (PS) having a boiling point of 130°C or lower to precipitate the polyester, thereby obtaining a slurry, and then subjecting the slurry to solid-liquid separation to obtain a solid polyester; and
   step (D): a step of drying the solid polyester to obtain a recycled polyester.

2. The method for producing a recycled polyester according to claim 1, wherein in the step (B), the polyester in the polyester composite material is dissolved in the dissolving solvent, and then a nonpolar solvent having a dielectric constant of 1 or higher and 3 or lower is mixed therewith to obtain the solution containing the polyester dissolved therein.

3. The method for producing a recycled polyester according to claim 1 or 2, wherein the polyester is one or more selected from the group consisting of polyethylene terephthalate, polytrimethylene terephthalate, polybutylene terephthalate, polyethylene naphthalate, polybutylene naphthalate, copolymers thereof, and copolymers thereof with a different resin.

4. The method for producing a recycled polyester according to claim 1 or 2, wherein the polyester composite material contains a polyester and a further component that is one or more selected from the group consisting of a low-molecular-weight organic compound, a metal compound, an inorganic fine particle, a fiber other than polyester and a resin other than polyester, and

   the recycled polyester is a polyester obtained by removing the further component.

5. The method for producing a recycled polyester according to claim 4, wherein the low-molecular-weight organic compound contains one or more selected from the group consisting of a colorant, a surfactant, an antistatic agent, and a flame retardant,

   the metal compound contains a matting agent and/or an ultraviolet absorber,
   the inorganic fine particle contains a pigment,
   the fiber other than polyester contains one or more selected from the group consisting of a natural fiber, an acrylic fiber, a rayon fiber, a polyurethane fiber, a nylon fiber, a polyethylene fiber, a polypropylene fiber, and a glass fiber, and
   the resin other than polyester contains one or more selected from the group consisting of a polyethylene resin, a polypropylene resin, a polyurethane resin, a polystyrene resin, a nylon resin, a polyvinyl chloride resin, and an acrylic resin.

6. The method for producing a recycled polyester according to claim 1 or 2, wherein the polyester composite material is a polyester-containing fiber.

7. The method for producing a recycled polyester according to claim 6, wherein the polyester-containing fiber contains at least a colorant, titanium oxide, and/or a fiber other than polyester,

   in the step (A), the polyester-containing fiber is bleached, and
   in the step (B), the titanium oxide and/or the fiber other than polyester is removed.

8. The method for producing a recycled polyester according to claim 1 or 2, wherein the washing solvent has a pH of lower than 13.0.

9. The method for producing a recycled polyester according to claim 1 or 2, wherein a washing temperature in the step (A) is 30°C or higher and 150°C or lower, and
a dissolution temperature in the step (B) is 30°C or higher and 150°C or lower.

10. The method for producing a recycled polyester according to claim 1 or 2, wherein the solvent (Y1) has a boiling point of 250°C or lower.

11. The method for producing a recycled polyester according to claim 9, wherein a dissolution temperature in the step (B) is a temperature higher than a washing temperature in the step (A).

12. The method for producing a recycled polyester according to claim 1 or 2, wherein a content of the solvent (X2) in the dissolving solvent in the step (B) is larger than a content of the solvent (X1) in the washing solvent in the step (A).

13. The method for producing a recycled polyester according to claim 1 or 2, wherein the poor solvent (PS) is one or more selected from the group consisting of an aromatic hydrocarbon-based solvent, an aliphatic hydrocarbon-based solvent, a ketone-based solvent, an aldehyde-based solvent, an alcohol-based solvent, an ether-based solvent, and water.

14. The method for producing a recycled polyester according to claim 1 or 2, wherein the solvent (Y1) is one or more selected from the group consisting of toluene, xylene, heptane, hexane, acetone, methanol, ethanol, ethylene glycol, propylene glycol, and water, and
the poor solvent (PS) is one or more selected from acetone, toluene, methanol, ethanol, and water.

15. The method for producing a recycled polyester according to claim 1 or 2, wherein a Ti content in the polyester composite is 500 ppm or more, and a Ti content in the recycled polyester is 100 ppm or less.

16. The method for producing a recycled polyester according to claim 1 or 2, wherein an N content in the polyester composite is 400 ppm or more, and an N content in the recycled polyester is 80 ppm or less.

17. The method for producing a recycled polyester according to claim 1, wherein before solid-liquid separation in the step (B), the solution containing the polyester dissolved therein and a filter aid are brought into contact with each other.

18. The method for producing a recycled polyester according to claim 1 or 17, wherein before solid-liquid separation in the step (B), the solution containing the polyester dissolved therein and an aggregating agent are brought into contact with each other.

19. A method for producing a recycled polyester from a polyester composite material, the method comprising the following step (B2), step (Z2), step (C2), and step (D2):

    step (B2): a step of mixing the polyester composite material and a dissolving solvent containing a solvent (X2) composed of a phenolic solvent and/or a chlorine-based organic solvent to obtain a solution containing a polyester in the polyester composite material dissolved therein;
    step (Z2); a step of bringing the solution containing the polyester dissolved therein and an aggregating agent into contact with each other, and then performing solid-liquid separation to obtain a liquid component (L2) containing the polyester dissolved therein;
    step (C2): a step of mixing the liquid component (L2) and a poor solvent (PS) having a boiling point of 130°C or lower to precipitate the polyester, thereby obtaining a slurry, and then subjecting the slurry to solid-liquid separation to obtain a solid polyester; and
    step (D2): a step of drying the solid polyester to obtain a recycled polyester.

20. The method for producing a recycled polyester according to claim 19, wherein before solid-liquid separation in the step (Z2), the solution containing the polyester dissolved therein and a filter aid are brought into contact with each other.

21. The method for producing a recycled polyester according to claim 19, wherein the aggregating agent is one or more selected from the group consisting of inorganic salts other than alkali metal salts and alkaline earth metal salts and polymer compounds.

22. The method for producing a recycled polyester according to claim 19 or 20, wherein the aggregating agent is composed of an inorganic salt other than alkali metal salts and alkaline earth metal salts.

23. The method for producing a recycled polyester according to claim 22, wherein the inorganic salt other than alkali metal salts and alkaline earth metal salts is one or more selected from the group consisting of iron(III) chloride, iron(II) sulfate, iron(III) sulfate, aluminum sulfate, and aluminum chloride.

24. The method for producing a recycled polyester according to claim 21, wherein the solution containing a polyester dissolved therein is brought into contact with the aggregating agent composed of an inorganic salt other than alkali metal salts and alkaline earth metal salts and is then brought into contact with the aggregating agent composed of a polymer compound.

25. The method for producing a recycled polyester according to claim 21 or 24, wherein the polymer compound is one or more selected from the group consisting of polyacrylamide and polyethylene oxide.

26. The method for producing a recycled polyester according to claim 17 or 20, wherein the filter aid is one or more selected from the group consisting of activated carbon, activated clay, celite, silica gel, a synthetic adsorbent, bentonite, alumina, and zeolite.

27. A method for producing a polyester composite material, the method comprising:

a step of obtaining a recycled polyester by the method for producing a recycled polyester according to any one selected from claims 1, 2, 17, 19, 20, 21, and 24; and
a step of producing a polyester composite material using the obtained recycled polyester.

Fig. 1

```
        ┌─────────────────────┐
        │   PEs COMPOSITE      │
        │      MATERIAL        │
        └──────────┬──────────┘
                   ▼
   ┌──────────────────────────────────────────┐
   │ STEP (A): PEs COMPOSITE MATERIAL IS WASHED │
   │          WITH WASHING SOLVENT.             │
   └──────────────────┬─────────────────────────┘
                      ▼
              ◇ POST WASHING? ◇──Yes──► ┌────────────────────────┐
                      │                 │ STEP (A0): PEs COMPOSITE│
                     No                 │ MATERIAL IS POST-WASHED.│
                      │                 └───────────┬────────────┘
                      ◄─────────────────────────────┘
   ┌──────────────────────────────────────────────────────────┐
   │ STEP (B): PEs IN PEs COMPOSITE MATERIAL IS DISSOLVED IN   │
   │ DISSOLVING SOLVENT, AND LIQUID COMPONENT (L) CONTAINING   │
   │ PEs DISSOLVED THEREIN IS ACQUIRED BY SOLID-LIQUID         │
   │ SEPARATION.                                              │
   └──────────────────────────────┬───────────────────────────┘
                                   ▼
   ┌──────────────────────────────────────────────────────────┐
   │ STEP (C): LIQUID COMPONENT (L) AND POOR SOLVENT (PS) ARE  │
   │ MIXED TO PRECIPITATE PEs, AND PEs IS ACQUIRED BY         │
   │ SOLID-LIQUID SEPARATION.                                 │
   └──────────────────────────────┬───────────────────────────┘
                                   ▼
              ◇ POST WASHING? ◇──Yes──► ┌────────────────────────┐
                      │                 │ STEP (C0): PEs IS POST- │
                     No                 │        WASHED.          │
                      │                 └───────────┬────────────┘
                      ◄─────────────────────────────┘
   ┌──────────────────────────────────────────────────────────┐
   │ STEP (D): PEs IS DRIED.                                   │
   └──────────────────────────────┬───────────────────────────┘
                                   ▼
                        ┌─────────────────────┐
                        │    RECYCLED PEs      │
                        └─────────────────────┘
```

Fig. 2

Fig. 3

```
            ╭────────────────────╮
            │  PEs-CONTAINING    │
            │      FIBER         │
            ╰────────────────────╯
                      │
                      ▼
┌──────────────────────────────────────────────┐
│ PEs-CONTAINING FIBER IS WASHED WITH WASHING   │ ── S10
│ SOLVENT.                                      │
└──────────────────────────────────────────────┘
                      │
                      ▼
┌──────────────────────────────────────────────┐
│ PEs-CONTAINING FIBER IS POST-WASHED.          │ ── S20
└──────────────────────────────────────────────┘
                      │
                      ▼
┌──────────────────────────────────────────────┐
│ PEs IN PEs-CONTAINING FIBER IS DISSOLVED IN   │ ── S30
│ DISSOLVING SOLVENT.                           │
└──────────────────────────────────────────────┘
                      │
                      ▼
┌──────────────────────────────────────────────┐
│ LIQUID CONTAINING PEs DISSOLVED THEREIN AND   │ ── S31
│ NONPOLAR SOLVENT ARE MIXED TOGETHER.          │
└──────────────────────────────────────────────┘
                      │
                      ▼
┌──────────────────────────────────────────────┐
│ SOLID-LIQUID SEPARATION IS PERFORMED, AND     │ ── S32
│ LIQUID COMPONENT (L) IS ACQUIRED.             │
└──────────────────────────────────────────────┘
                      │
                      ▼
┌──────────────────────────────────────────────┐
│ LIQUID COMPONENT (L) AND POOR SOLVENT (PS)    │ ── S40
│ ARE MIXED TOGETHER TO PRECIPITATE PEs, AND    │
│ PEs IS ACQUIRED BY SOLID-LIQUID SEPARATION.   │
└──────────────────────────────────────────────┘
                      │
                      ▼
┌──────────────────────────────────────────────┐
│ PEs IS POST-WASHED.                           │ ── S50
└──────────────────────────────────────────────┘
                      │
                      ▼
┌──────────────────────────────────────────────┐
│ PEs IS DRIED.                                 │ ── S60
└──────────────────────────────────────────────┘
                      │
                      ▼
            ╭────────────────────╮
            │   RECYCLED PEs     │
            ╰────────────────────╯
```

## INTERNATIONAL SEARCH REPORT

| International application No. |
|---|
| **PCT/JP2024/013204** |

| A. | CLASSIFICATION OF SUBJECT MATTER |
|---|---|

*C08J 11/08*(2006.01)i; *C08J 3/14*(2006.01)i
FI:   C08J11/08 CFD; C08J3/14

According to International Patent Classification (IPC) or to both national classification and IPC

| B. | FIELDS SEARCHED |
|---|---|

Minimum documentation searched (classification system followed by classification symbols)

C08J11/08: C08J3/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022/040119 A1 (ALADDIN MANUFACTURING CORPORATION) 24 February 2022 (2022-02-24)<br>p. 1, line 22 to p. 11, line 31 | 1-27 |
| Y | JP 51-115577 A (MONSANTO CO.) 12 October 1976 (1976-10-12)<br>p. 3, upper left column, line 17 to upper right column, line 3, p. 3, lower left column, lines 3-18 | 1-18, 26-27 |
| Y | US 2022/0332914 A1 (UOP LLC) 20 October 2022 (2022-10-20)<br>paragraphs [0007], [0013] | 17, 20, 26 |
| Y | JP 2009-112901 A (MITSUBISHI RAYON CO., LTD.) 28 May 2009 (2009-05-28)<br>paragraphs [0024], [0025] | 18-27 |

| ☐ Further documents are listed in the continuation of Box C. | ☑ See patent family annex. |
|---|---|

*     Special categories of cited documents:
"A"   document defining the general state of the art which is not considered to be of particular relevance
"D"   document cited by the applicant in the international application
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| **04 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/013204**

| Patent document cited in search report | | | Publication date (day/month/year) | Patent family member(s) | | | Publication date (day/month/year) |
|---|---|---|---|---|---|---|---|
| WO | 2022/040119 | A1 | 24 February 2022 | US | 2023/0303799 | A1 | |
| | | | | EP | 4196517 | A1 | |
| | | | | CA | 3187122 | A1 | |
| | | | | CN | 116194808 | A | |
| JP | 51-115577 | A | 12 October 1976 | US | 4003881 | A | |
| | | | | column 2, lines 12-17, column 2, lines 38-52 | | | |
| | | | | GB | 1500855 | A | |
| | | | | DE | 2607344 | A1 | |
| | | | | FR | 2301555 | A1 | |
| | | | | CA | 1039895 | A | |
| | | | | IT | 1055437 | B | |
| US | 2022/0332914 | A1 | 20 October 2022 | WO | 2022/221832 | A1 | |
| | | | | EP | 4323436 | A1 | |
| | | | | CN | 117279986 | A | |
| | | | | KR | 10-2023-0169276 | A | |
| | | | | AU | 2022257112 | A1 | |
| JP | 2009-112901 | A | 28 May 2009 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002060369 A
- JP 11060795 A

- JP 6708642 B